# EUROPÄISCHE PATENTANMELDUNG

(11) **EP 3 799 261 A1**
(43) Veröffentlichungstag der Anmeldung: **31.03.2021**
(21) Anmeldenummer: 20169961.8
(22) Anmeldetag: 16.04.2020
(51) Int. Cl.: H02K 1/14, H02K 15/02, H02K 1/06

(54) **MEHRTEILIGER STATOR, ELEKTRISCHE MASCHINE SOWIE VERFAHREN ZUR HERSTELLUNG EINES MEHRTEILIGEN STATORS UND EINER ELEKTRISCHEN MASCHINE**

(30) Priorität: 25.09.2019 DE 102019125862
(71) Anmelder: Vacuumschmelze GmbH & Co. KG, 63450 Hanau (DE)
(72) Erfinder: VOLBERS, Niklas, 63486 Bruchköbel (DE); ANSMANN, Rudi, 63776 Mömbris (DE)
(74) Vertreter: JENSEN & SON

(57) **Zusammenfassung**

Ein mehrteiliger Stator (30) für eine elektrische Maschine wird bereitgestellt, der eine Vielzahl von Statorsegmenten (40, 41; 31, 32) aufweist, die jeweils mehrere weichmagnetische Blechlamellen (10, 11) aufweisen, die aufeinander in einer Stapelrichtung (18) zu einem Blechpaket (23) gestapelt. An zumindest einer Randseite (33) des Blechpakets eines ersten Statorsegments (31) ragt zumindest eine Blechlamelle heraus und bildet einen Finger (34). An zumindest einer Randseite (35) des Blechpakets eines zweiten Statorsegments (32) ragen zumindest zwei Blechlamellen heraus und bilden zumindest zwei Finger (36). Der Finger (34) des ersten Statorsegments (31) und die zumindest zwei Finger (36) des zweiten Statorsegments (32) greifen ineinander, um das erste Statorsegment (31) mit dem zweiten Statorsegment (32) mechanisch zu koppeln.

## Beschreibung

Die Erfindung betrifft einen mehrteiligen Stator, eine elektrische Maschine sowie ein Verfahren zur Herstellung eines mehrteiligen Stators und einer elektrischen Maschine.

Elektrische Maschinen weisen in den meisten Ausführungen einen Stator aus einem weichmagnetischen Material auf. Der Stator kann aus massivem Material bestehen. In manchen Ausführungen wird der Stator aus aufeinander gestapelten Einzelblechen oder Blechlamellen, ein so genanntes Blechpaket, aufgebaut. Die Funktion dieser Bleche besteht darin, den magnetischen Fluss in der Blechebene zu führen. Eine hohe magnetische Leitfähigkeit (Permeabilität) des Materials sowie das Vermögen, eine möglichst große Flussdichte (Induktion) zu tragen, ist dabei von Vorteil, um die Leistung des Stators zu erhöhen. Als Materialien für Blechpakete für Statoren finden sich vorwiegend Werkstoffe aus Silizium-Eisen (SiFe), d.h. Fe mit einer Zulegierung von 2 bis 4 Gew.-% (Si + Al). Bei Anwendungen, in denen eine möglichst hohe Leistungsdichte notwendig oder gewünscht ist, kommen auch Werkstoffe aus Kobalt-Eisen (CoFe) zum Einsatz.

Neben der Wahl des Werkstoffs hat aber auch die Fertigungstechnik einen Einfluss auf die Leistung des Stators und damit auch auf die gesamte elektrische Maschine. Die Einzelbleche können mit verschiedenen Verfahren hergestellt werden, wie z.B. Stanzen, Laserschneiden, Wasserstrahlschneiden oder Erodieren. Das Fügen der Bleche zum Stator kann ebenfalls durch eine Vielzahl von Verfahren erfolgen, z.B. durch Anbringen einer durchgehenden Laserschweißnaht oder durch Verkleben. Dabei gibt es auch Verfahren, bei denen das Fügen der Bleche direkt im Werkzeug realisiert wird, wie z.B. beim Stanzpaketieren.

Ein weiteres Verfahren ist die Fertigung einzelner Zähne des Stators. Diese werden in der gewünschten Höhe hergestellt und anschließend so miteinander verbunden, dass sie einen kompletten Stator ergeben. Beispielsweise offenbart die Druckschrift EP 0 833 427 A1 ein Verfahren zum Herstellen von Statorzähnen.

Bei dem Herstellen eines Stators aus mehreren Statorzähnen müssen die getrennten Statorzähne zueinander ausgerichtet und danach miteinander verbunden werden. Damit die Luftspalte zwischen den Teilen klein sind, muss dieses Verfahren präzise durchgeführt werden, um Einbußen in der Leistung des Stators zu vermeiden bzw. zu minimieren.

Aufgabe besteht somit darin, einen mehrteiligen Stator bereitzustellen, der einfacher und zuverlässiger zusammengebaut werden kann.

Erfindungsgemäß wird ein mehrteiliger Stator für eine elektrische Maschine bereitgestellt. Der mehrteilige Stator weist eine Vielzahl von Statorsegmenten auf. Die Statorsegmente weisen jeweils mehrere weichmagnetische Blechlamellen auf, die aufeinander in einer Stapelrichtung zu einem Blechpaket gestapelt sind. An zumindest einer Randseite des Blechpakets eines ersten Statorsegments ragt zumindest eine Blechlamelle heraus und bildet einen Finger. An zumindest einer Randseite des Blechpakets eines zweiten Statorsegments ragen zumindest zwei Blechlamellen heraus und bilden zumindest zwei Finger. Der Finger des ersten Statorsegments und die zumindest zwei Finger des zweiten Statorsegments greifen ineinander, um das erste Statorsegment mit dem zweiten Statorsegment mechanisch zu koppeln.

Beispiele eines Statorsegments sind ein Statorzahn oder ein Statorring. In einem Ausführungsbeispiel werden mehrere Statorzähne zu einem Stator mit Hilfe der Finger zusammengebaut. Die Statorzähne erstrecken sich radial von einer Rotationsachse des Stators, die am Mittelpunkt des Stators angeordnet ist, so dass der Stator zylinderförmig ist. Die Stapelrichtung des Blechpakets der Statorsegmente ist senkrecht zu der Hauptoberfläche der Blechlamelle und somit parallel zu der Rotationsachse des Stators.

In einem Ausführungsbeispiel sind diese Statorzähne ferner von einem Statorring umgeben, der aus einem Teil besteht, und mit dem Statorring über die Finger mechanisch gekoppelt.

Die Finger sind somit jeweils aus zumindest einer der Blechlamellen gebildet und insbesondere aus einem Endteil der Blechlamellen, der aus der Randseite des Blechpakets herausragt. Die Finger der zwei Statorsegmente sind ineinander vorschoben, sodass der Finger des ersten Statorsegments zwischen den Fingern des zweiten Statorsegments liegt, um eine Fügestelle zu bilden. In der Fügestelle überlappen die Finger der zwei Statorsegmente und stellen eine mechanische Verbindung zwischen den zwei Statorsegmenten bereit, die stabil ist. Folglich können weitere Statorsegmente in der gleichen Weise nach und nach an diesen Aufbau angebaut werden, ohne die Ausrichtung der Statorsegmente zu beeinträchtigen. Der mehrteilige Stator kann somit einfacher und mit einfacheren Werkzeugen zusammengebaut werden. Erst anschließend können die zusammengebauten Statorsegmente befestigt werden, um den Stator fertig zu stellen.

Außerdem wird auf Grund der ineinander verschobenen Finger, die im Bereich der Fügestelle überlappen, kein durchgehender vertikaler Luftspalt geformt, so dass die magnetischen Eigenschaften des Stators verbessert werden.

In einem Ausführungsbeispiel wird eine Vertiefung zwischen den zwei Fingern des zweiten Statorsegments geformt und der Finger des ersten Statorsegments ist in der Vertiefung des zweiten Statorsegments angeordnet, um das erste Statorsegment mit dem zweiten Statorsegment mechanisch zu koppeln. Die Vertiefung ist durch die zwei benachbarten Finger und die Endfläche zumindest einer Blechlamelle gebildet, die zwischen den zwei Finger angeordnet ist.

In einem Ausführungsbeispiel sind die Finger des Blechpakets des ersten Statorsegments abwechselnd mit den Fingern des Blechpakets des zweiten Statorsegments in der Stapelrichtung angeordnet , so dass der oder die Finger des ersten Statorsegments und die zumindest zwei Finger des zweiten Statorsegments ineinandergreifen und eine gemeinsame Ober- und Unterseite des Stators gebildet wird. Der oder die Finger des ersten Statorsegments sind somit zu der Vertiefung zwischen den Finger des zweiten Statorsegments gerichtet und die Finger des zweiten Statorsegments sind somit zu der Vertiefung zwischen den Finger des ersten Statorsegments gerichtet.

Typischerweise weist zumindest eine Randseite der jeweiligen Blechpakete mehrere herausragende Finger auf, die jeweils aus zumindest einer Blechlamelle gebildet sind. Die Finger sind übereinander in der Stapelrichtung angeordnet und benachbarte Finger sind durch eine Vertiefung voneinander in Abständen angeordnet.

In einem Ausführungsbeispiel weisen die Finger jeweils eine einzige Blechlamelle auf und die Vertiefung zwischen benachbarten Fingern eine Höhe auf, die der Dicke einer einzigen Blechlamelle entspricht. Dieses Ausführungsbeispiel kann für dickeren Blechlamellen verwendet werden, die jeweils allein ausreichend mechanisch stabil sind, um eine mechanische Kopplung bereitzustellen.

In einem Ausführungsbeispiel sind die Finger jeweils aus einer Vielzahl von n Blechlamellen gebildet, wobei n eine natürliche Zahl ist und n ≥ 2 ist. n nicht herausragende Blechlamellen sind zwischen benachbarten Fingern angeordnet, die eine Vertiefung mit einer Höhe h bilden, die der Dicke von n Blechlamellen entspricht. Diese Anordnung kann für dünnere Blechlamellen verwendet werden, so dass die jeweiligen Finger eine höhere mechanische Belastbarkeit haben, um den Zusammenbau der Statorsegmente zu erleichtern.

In einem Ausführungsbeispiel erstrecken sich die Finger senkrecht zu der Stapelrichtung in einer radialen Richtung, d.h. senkrecht in einer radialen Richtung von der Rotationsachse des Stators. Diese Anordnung kann verwendet werden, um die Umfangsrandseite eines Statorzahns mit einem Statorring zu verbinden.

In einem Ausführungsbeispiel erstrecken sich die Finger in eine Umfangrichtung. Diese Anordnung kann verwendet werden, um benachbarte Statorzähne zu einem kreisförmigen Stator zu verbinden. Diese Anordnung kann auch verwendet werden, um zwei oder mehrere gebogene Teile eines Statorrings miteinander zu verbinden. Diese gebogenen Teile können jeweils einen Statorzahn oder mehrere Statorzähne aufweisen.

In manchen Ausführungsbeispielen weisen die Statorsegmente an einer ersten Randseite erste Finger auf, die sich in einer radialen Richtung erstrecken, und an einer zweiten Randseite zweite Finger auf, die sich in eine Umfangrichtung erstrecken. Somit können benachbarte Statorzähne zu einem kreisförmigen Stator und mit einem Statorring verbunden werden.

In einem Ausführungsbeispiel weisen die Finger eine Breite auf, die kleiner ist als die Breite der Randseite des Blechpakets. Die Finger sind somit an nur einem Teil der Randseite des Statorsegments angeordnet. In den restlichen Randseiten liegen die Endflächen der Blechlamellen in einer Ebene und bilden eine ebene Randseite.

In manchen Ausführungsbeispielen weisen die Finger jeweils eine Endfläche mit einem Ausschnitt oder einem Vorsprung auf. Die Finger des ersten Statorsegments können jeweils einen Ausschnitt und die Vertiefung des zweiten Statorsegments kann einen Vorsprung aufweisen, wobei der Ausschnitt und der Vorsprung ineinander greifen, um die laterale Position der Finger und der Vertiefung und somit die laterale Position der ersten und zweiten Statorsegmente zu bestimmen. Alternativ können die Finger des ersten Statorsegments jeweils einen Vorsprung und die Vertiefung des zweiten Statorsegments jeweils einen Ausschnitt aufweisen, wobei der Ausschnitt und der Vorsprung ineinander greifen, um die laterale Position des Fingers und der Vertiefung zu bestimmen. Der Ausschnitt kann zum Beispiel eine U-Form oder eine V-Form aufweisen und der Vorsprung die Form eines umgedrehten U bzw. V aufweisen.

Wie oben bereits erwähnt, können die Statorsegmente verschiedene Teile des Stators bereitstellen. Beispielsweise können die Statorsegmente jeweils die Gestalt eines Statorzahns aufweisen, wobei die Statorzähne zu einem zylindrischen Stator zusammengefügt sind, oder ein Statorsegment kann die Gestalt eines Statorrings und mehrere Statorsegmente jeweils die Gestalt eines Statorzahns aufweisen, wobei die Statorzähne miteinander zu einem zylindrischen Stator zusammengefügt sind und mit einer inneren Randseite des Statorrings zusammengefügt sind.

In einem Ausführungsbeispiel weisen die Statorsegmente jeweils die Gestalt eines Teils eines Statorrings mit mehreren Statorzähnen auf, wobei die Teile des Statorrings miteinander zu einem zylindrischen Stator zusammengefügt sind. Die Finger erstrecken sich aus der Endfläche des Teils des Statorrings, während die Statorzähne mit dem Teil des Statorrings integral sind. Diese Anordnung ermöglicht eine reduzierte Anzahl an Verbindungsstellen im Vergleich zu einer Anordnung, bei der jeder Statorzahn einzeln über eine Verbindungsstelle mit einem Statorring verbunden ist oder bei der jeder Statorzahn mit zwei weiteren Statorzähnen verbunden ist. Eine geringere Anzahl an Verbindungsstellen kann zum Beispiel verwendet werden, um die magnetischen Eigenschaften des Stators zu verbessern, beispielsweise um die Ummagnetisierungsverluste zu reduzieren.

Die Statorzähne können jeweils eine T-Form oder eine I-Form aufweisen. Die Finger können sich aus der Endfläche der Arme bzw. horizontalen Teile der T-Form oder der I-Form erstrecken, so dass ein Hohlraum zwischen den Randseiten benachbarter Statorzähne des Stators bzw. Statorsegments bereitstellt ist. Eine Wicklung kann in diesem Hohlraum angeordnet werden.

In einem Ausführungsbeispiel sind die Statorsegmente Statorzähne und der Stator weist ferner für jeden Statorzahn eine Wicklung auf. Diese Wicklung kann mittels Linearwickeln, Flyerwickeln, Nadelwickeln oder mittels Einziehtechnik aufgebracht werden. Der Stator kann nach seiner Montage bewickelt werden, oder die Statorzähne können einzeln bewickelt und danach zu einem Stator aufgebaut werden.

In einem Ausführungsbeispiel weist das Blechpaket erste und zweite Blechlamellen, die die gleiche Fläche und die gleiche Außenkontur aufweisen. In diesem Ausführungsbeispiel können die erste Blechlamelle und die zweite Blechlamelle relativ zueinander lateral versetzt, um eine Randseite mit einem Finger aus einer herausragenden Blechlamelle, beispielsweise die erste Blechlamelle zu bilden und eine lateral gegenüber liegende Randseite mit einem Finger aus einer herausragenden Blechlamelle, beispielsweise die zweite Blechlamelle zu bilden. Dieses Ausführungsbeispiel kann zum Beispiel für rechteckige Blechlamellen verwendet werden.

In einem Ausführungsbeispiel weist das Blechpaket erste Blechlamellen und zweite Blechlamellen auf, die unterschiedliche Außenkonturen aufweisen, wobei die ersten und zweiten Blechlamellen jeweils eine erste Endfläche und eine zweite Endfläche aufweisen, die gegenüber der ersten Endfläche liegt.

In einer Gestaltung sind eine erste Blechlamelle und eine zweite Blechlamelle derart angeordnet, sodass eine erste Endfläche der ersten Blechlamelle über eine erste Endfläche der zweiten Blechlamelle an einer ersten Randseite des Blechpakets herausragt und die zweite Endfläche der zweiten Blechlamelle über die zweite Endfläche der ersten Blechlamelle an einer zweiten Randseite des Blechpakts herausragt, die gegenüber der ersten Randseite liegt. Diese Gestaltung kann zum Beispiel bei Statorzähnen verwendet werden, die zu einem kreisförmigen Stator zusammengebaut und somit mit einem Statorzahn auf zwei gegenüberliegenden Seiten verbunden werden.

In einer weiteren Gestaltung sind eine erste Blechlamelle und eine zweite Blechlamelle derart angeordnet, so dass eine erste Endfläche der ersten Blechlamelle über eine erste Endfläche der zweiten Blechlamelle an einer ersten Randseite des Blechpakets herausragt, wobei die zweite Endfläche der zweiten Blechlamelle und die zweite Endfläche der ersten Blechlamelle an einer zweiten Randseite des Blechpakets in einer Ebene liegen. Dieses Ausführungsbeispiel kann bei einem Statorring verwendet werden, die nur an seiner inneren Randseite mit den Statorzähnen verbunden wird. Die zweite Randseite kann gegenüber der ersten Randseite liegen oder senkrecht zu der ersten Randseite sein.

In einem Ausführungsbeispiel weisen die Finger des Blechpakets des ersten Statorsegments jeweils eine Länge von mindestens 2 mm und die Vertiefungen des Blechpakets des zweiten Statorsegments eine Länge auf, die nicht kleiner als die Länge der Finger des ersten Blechpakets ist. Diese Dimensionen ermöglichen eine einfache Handhabung bei dem Zusammenbau sowie eine ausreichende mechanische Stabilität bei dem noch nicht fest verbundenen Zusammenbau.

Die weichmagnetische Legierung der Blechlamellen kann unterschiedliche Zusammensetzungen haben. Beispielweise können die Blechlamellen aus einer FeSi-basierten Legierung mit 2 bis 4,5 Gewichts-% von mindestens einem Element aus der Gruppe Si und Al, Rest Fe und unvermeidbaren Verunreinigungen aufweisen.

In anderen Ausführungsbeispielen ist die weichmagnetische Legierung eine CoFe-basierte Legierung. Die CoFe-basierte Legierung kann 35 bis 55 Gewichts-% Co und bis zu 2,5 Gewichts-% V, Rest Fe und unvermeidbaren Verunreinigungen, oder 45 Gewichts-% ≤ Co ≤ 52 Gewichts-%, 45 Gewichts-% ≤ Fe ≤ 52 Gewichts-%, 0,5 Gewichts-% ≤ V ≤ 2,5 Gewichts-%, Rest Fe und unvermeidbaren Verunreinigungen aufweisen, oder 35 Gewichts-% ≤ Co ≤ 55 Gewichts-%, vorzugsweise 45 Gewichts-% ≤ Co ≤ 52 Gewichts-%, 0 Gewichts-% ≤ Ni ≤ 0,5 Gewichts-%, 0,5 Gewichts-% ≤ V ≤ 2,5 Gewichts-%, Rest Fe und unvermeidbaren Verunreinigungen, oder 35 Gewichts-% ≤ Co ≤ 55 Gewichts-%, 0 Gewichts-% ≤ V ≤ 2,5 Gewichts-%, 0 Gewichts-% ≤ (Ta + 2Nb) ≤ 1 Gewichts-%, 0 Gewichts-% ≤ Zr ≤ 1,5 Gewichts-%, 0 Gewichts-% ≤ Ni ≤ 5 Gewichts-%, 0 Gewichts-% ≤ C ≤ 0,5 Gewichts-%, 0 Gewichts-% ≤ Cr ≤ 1 Gewichts-%, 0 Gewichts-% ≤ Mn ≤ 1 Gewichts-%, 0 Gewichts-% ≤ Si ≤ 1 Gewichts-%, 0 Gewichts-% ≤ Al ≤ 1 Gewichts-%, 0 Gewichts-% ≤ B ≤ 0,01 Gewichts-%, Rest Fe und unvermeidbaren Verunreinigungen, oder 5 bis 25 Gewichts-% Co, 0,3 bis 5,0 Gewichts-% V, Rest Fe und unvermeidbaren Verunreinigungen aufweisen.

Zwei oder mehrere unterschiedliche weichmagnetische Legierungen können in einem Stator verwendet werden. Beispielsweise können Statorsegmente aus unterschiedlichen Legierungen bestehen. In einem Ausführungsbeispiel sind die Statorzähne aus einer Legierung und den Statorring aus einer anderen Legierung gebildet. Es ist auch möglich, das Blechpaket eines Statorsegments aus Blechlamellen unterschiedlicher Legierungen zu bilden. Dieses Ausführungsbeispiel kann verwendet werden, um die magnetischen Eigenschaften des Blechpakets einzustellen.

Eine elektrische Maschine wird auch bereitgestellt, die einen Rotor und einen Stator nach einem der hierin beschriebenen Ausführungsbeispielen und eine Wicklung um den Stator herum aufweist. Die elektrische Maschine wird als Motor oder Generator eingesetzt.

Eine lineare elektrische Maschine wird auch bereitgestellt, die einen Läufer und einen und einen Stator nach einem der hierin beschriebenen Ausführungsbeispielen und eine Wicklung um den Stator herum aufweist. Die lineare elektrische Maschine wird als Motor oder Generator eingesetzt.

Die elektrische Maschine kann zum Beispiel als Antrieb für ein elektrisches oder hybridelektrisches Flugzeug, als Haupt- oder Zusatzantrieb für ein Kraftfahrzeug oder als Generator zur Stromerzeugung für ein Flugzeug dienen.

Erfindungsgemäß wird ein Verfahren zum Herstellen eines mehrteiligen Stators bereitgestellt, das folgendes aufweist:
Bereitstellen zumindest eines Bands aus einer weichmagnetischen Legierung, das mit einem Isolationsmaterial beschichtet ist,
Formen mehrerer Blechlamellen aus dem beschichteten Band,
Stapeln einer ersten Vielzahl von Blechlamellen aufeinander in einer Stapelrichtung, wobei die Blechlamellen derart angeordnet sind, dass an zumindest einer Randseite zumindest eine Blechlamelle herausragt und einen Finger bildet,
Verbinden der Blechlamellen und Bilden eines ersten Blechpakets eines ersten Statorsegments mit zumindest einem Finger an einer Randseite,
Stapeln einer zweiten Vielzahl von Blechlamellen aufeinander in einer Stapelrichtung, wobei die Blechlamellen derart angeordnet sind, dass an zumindest einer Randseite zumindest zwei Blechlamellen herausragen und zumindest zwei Finger bilden,
Verbinden der Blechlamellen und Bilden eines zweiten Blechpakets eines zweiten Statorsegments mit zumindest zwei Fingern an einer Randseite,
Zusammenfügen der Finger des ersten Statorsegments und der zumindest zwei Finger des zweiten Statorsegments, so dass der Finger des ersten Statorsegments und die zumindest zwei Finger des zweiten Statorsegments ineinandergreifen, um das erste Statorsegment mit dem zweiten Statorsegment mechanisch zu koppeln.

Dieses Verfahren kann verwendet werden, um den mehrteiligen Stator nach einem der hierin beschriebenen Ausführungsformen herzustellen. Nachdem die Statorsegmente zusammengebaut sind, werden sie fest miteinander verbunden, beispielsweise geklebt, mechanisch fixiert oder gelötet.

Als Materialien für die Blechlamelle können Werkstoffe aus Silizium-Eisen (SiFe), d.h. Fe mit einer Zulegierung von 2 bis 4 Gew.-% (Si + Al), verwendet werden, die unter dem Handelsname TRAFOPERM® N4 von der Firma Vacuumschmelze GmbH & Co KG, Hanau, Deutschland, kommerziell erhältlich ist. Bei Anwendungen, in denen eine möglichst hohe Leistungsdichte notwendig oder gewünscht ist, kommen auch Werkstoffe aus Kobalt-Eisen (CoFe) zum Einsatz. Beispiele dafür sind VACODUR® 49 mit einer ungefähren Zusammensetzung von 49% Co, 49% Fe und 2%V oder VACOFLUX® X1 mit einer ungefähren Zusammensetzung von 17% Co, 1,4% V, Rest Fe, die ebenfalls von der Firma Vacuumschmelze GmbH & Co KG, Hanau, Deutschland kommerziell erhältlich sind.

Ein Vorteil dieses Verfahrens sind die geringeren Herstellkosten, da zum einen das benötigte Stanzwerkzeug deutlich kleiner und damit günstiger ausfällt. Weiterhin fällt auch weniger Schrott an als bei einem Gesamtschnitt eines Stators. Dieser Vorteil ist insbesondere für kostenintensive Werkstoffe sehr attraktiv, z.B. für CoFe, aber auch für stark optimierte SiFe-Werkstoffe mit 2 bis 4% Si, z.B. die unter der Bezeichnung NO10 bzw. NO20 bekannten Bleche mit Banddicken von 0,10 mm bzw. 0,20 mm.

Insbesondere für CoFe ist das erfindungsgemäße Verfahren sehr attraktiv, da es zwei werkstoffspezifische Nachteile ausgleichen kann. Kommerziell erhältliche Legierungen mit 49% Co, 49% Fe und 2% V sind auf Bandbreiten von 340 mm beschränkt, im Gegensatz zu SiFe, das standardmäßig in Bandbreiten von mehr als 1000 mm lieferbar ist. Statoren mit einem Außendurchmesser größer 340 mm lassen sich daher nicht aus einem Teil fertigen. Die Methode der Statorzähne erlaubt es daher, auch größere Statoren aus CoFe zu fertigen. Je größer das Teil allerdings ist, desto schwieriger wird auch die Montage des Stators.

Die oben genannte Klasse der CoFe-Legierungen zeigt bei der nach der Formgebung notwendigen magnetischen Schlussglühung ein Wachstum, das im Bereich von 0,1% bis 0,2% liegt. Bei großen Teilen führt das dazu, dass enge Toleranzen, wie sie z.B. für einen geringen Luftspalt zwischen Statorzähnen und Rotor notwendig sind, nicht mehr eingehalten werden können. Fertigt man das gleiche Teil aber aus Einzelzähnen, so fällt das absolute Wachstum an diesen geringer aus, da jedes Teil für sich kleiner ist. Es lassen sich somit einfacher enge Maßtoleranzen einstellen.

Hochsättigende weichmagnetische Werkstoffe mit einem Co-Gehalt von bis zu 50% sind hervorragend dazu geeignet, den magnetischen Fluss durch den Statorzahn zu leiten. Auf Grund des teuren Rohstoffs Co und des typischerweise aufwändigen Fertigungswegs ist man allerdings bestrebt, die Verwendung des Materials auf ein Mindestmaß zu beschränken. Ein Ansatz zur Verringerung des teuren CoFe-Materials ist es, Statorzähne aus CoFe in I-Form und einen Statorring aus einem günstigeren Material, z.B. SiFe, herzustellen. Anschließend können die CoFe-Zähne in den Statorring montiert werden.

Im Bereich von High-End-Maschinen ist auch eine Optimierung der Kupferbewicklung wünschenswert, um eine hohe Leistungsdichte zu erzielen. Bei Einzelzähnen ergibt sich hier der Vorteil, dass die Zähne zunächst bewickelt werden können, um anschließend die bewickelten Zähne miteinander zu dem Stator zu verbinden. Bei der Einzelzahnbewicklung können höhere Kupferdichten erzielt werden, was bei gleicher Kühlleistung eine höhere Bestromung des Motors erlaubt oder alternativ bei gleicher Bestromung geringere Kühlleistungen erfordert.

Bei den üblichen Geometrien für Einzelzähne zur Herstellung von Statoren für Elektromotoren sind die Zähne nur horizontal ausgerichtet. Axial und vertikal haben die Zähne keine Fixierung. Somit ist im Allgemeinen eine aufwändige Montierhilfe notwendig, die die miteinander verbundenen Zähne fixiert. Die Verbindung zweier Statorzähne miteinander alleine bringt nur eine unzureichende Eigenstabilität mit sich. Diese Nachteile werden durch die erfindungsgemäße Gestaltung des Blechpakets der Statorsegmente vermieden.

In einem Ausführungsbeispiel zum Herstellen eines Statorsegments werden erste Blechlamellen mit einer ersten Außenkontur und zweite Blechlamellen mit einer zweiten Außenkontur, die zu der ersten Außenkontur unterschiedlich ist, aus dem beschichteten Band geformt und aufeinander gestapelt, wobei nach dem Stapeln einer ersten Blechlamelle auf einer zweiten Blechlamelle ein Finger aus einem herausragenden Teil der ersten Blechlamelle oder aus einem herausragenden Teil der zweiten Blechlamelle geformt wird.

In einem Ausführungsbeispiel werden die ersten Blechlamellen und zweiten Blechlamellen abwechselnd aufeinander aufgestapelt. In diesem Ausführungsbeispiel sind die Finger aus einer einzigen Blechlamelle gebildet.

In einem Ausführungsbeispiel werden n erste Blechlamellen aufeinander gestapelt und dann n zweite Blechlamellen aufgestapelt, um einen Finger aus n ersten Blechlamellen oder aus n zweiten Blechlamellen zu bilden, wobei n ≥ 2 ist. Dieses Ausführungsbeispiel kann verwendet werden, um dickere Finger bereitzustellen.

In einem Ausführungsbeispiel werden die Blechlamellen für das erste Statorsegment aus einem ersten Band einer ersten weichmagnetischen Legierung und die Blechlamellen für das zweite Statorsegment aus einem zweiten Band einer zweiten weichmagnetischen Legierung geformt, wobei die erste und zweite weichmagnetische Legierungen unterschiedlich sind. Dieses Ausführungsbeispiel kann zum Beispiel verwendet werden, um die Statorzähne aus einer CoFe-Legierung und einen Statorring aus einer FeSi-Legierung zu bilden, die zu einem Stator mit zwei unterschiedlichen Materialien zusammengebaut werden.

In manchen Ausführungsbeispielen weisen die Blechlamellen verschiedene Statorsegmente eine unterschiedliche Dicke auf. Dies kann zum Beispiel der Fall sein, wenn die Statorsegmente unterschiedliche Zusammensetzungen aufweisen. In diesem Fall weisen die Finger und Vertiefungen der zusammenzufügenden Segmente unterschiedliche Dicken auf, wenn sie jeweils aus der gleichen Anzahl an Blechlamellen gebildet sind. Dieser Dickenunterschied kann kompensiert werden, sodass die Finger ineinandergreifen können, indem die Anzahl der ersten und zweiten Blechlamellen unterschiedlicher Außenkontur der zwei Statorsegmenten aneinander angepasst wird.

In einem Ausführungsbeispiel werden für das erste Statorsegment n ersten Blechlamellen aufeinander gestapelt und m zweite Blechlamellen auf den n ersten Blechlamellen gestapelt, wobei ein Finger aus einem herausragenden Teil der n ersten Blechlamellen und/oder aus einem herausragenden Teil der m zweiten Blechlamellen geformt wird. Die Anzahl von m zweiten Blechlamellen stellt eine Vertiefung für die Finger des zweiten Statorsegments dar. Das zweite Statorsegment wird so aufgebaut, dass die Vertiefungen eine Höhe h aufweisen, in die ein Finger des ersten Statorsegments, der aus n Blechlamellen gebildet ist, eingeschoben werden kann, und sodass ein Finger des zweiten Statorsegments in der Vertiefung mit einer Höhe h von m zweiten Blechlamellen des ersten Statorsegments eingeschoben werden kann.

Das Formen der mehreren Blechlamellen kann mittels Stanzen oder Laserschneiden oder Wasserstrahlschneiden erfolgen. Das Verbinden der Blechlamellen kann mittels Laserschweißens oder Klebens erfolgen.

In einem Ausführungsbeispiel wird das Blechpaket mit Stanzpaketieren hergestellt. Beim Stanzpaketieren werden die Blechlamellen nacheinander geformt, gestapelt und noch im Stanzpaketierwerkzeug mit der darunterliegenden Blechlamelle verbunden.

Abhängig von der Zusammenfassung der weichmagnetischen Legierung und das Herstellung des Bands können eine oder mehrere Glühungen durchgeführt werden, um das Gefüge und damit die weichmagnetischen Eigenschaften einzustellen.

In einem Ausführungsbeispiel wird das Blechpaket geglüht. In diesem Ausführungsbeispiel werden somit die Statorsegmente vor dem Zusammenbau zu einem Stator geglüht.

In einem Ausführungsbeispiel werden die Blechlamellen geglüht und danach zu einem Blechpaket gestapelt. Es ist auch möglich, das Blechpaket aus den geglühten Blechlamellen einer zweiten Glühung zu unterziehen.

In einem Ausführungsbeispiel werden die Statorsegmente zu einem Stator zusammengebaut und der Stator geglüht.

Die Bedingungen der Glühung werden je nach Wahl des weichmagnetischen Werkstoffs eingestellt.

Beispielsweise kann bei einer CoFe-basierten Legierung mit 35 bis 55 Gewichts-% Co und bis zu 2,5 Gewichts-% V, Rest Fe und unvermeidbaren Verunreinigungen eine Glühung von 6h 880°C unter trockenem Wasserstoff verwendet werden.

Bei einer CoFe-basierten Legierung mit 5 bis 25 Gewichts-% Co, 0,3 bis 5,0 Gewichts-% V, Rest Fe und unvermeidbaren Verunreinigungen kann eine Glühung von 4h 1000°C mit langsamer Abkühlung von 30 K/h bis 900°C, Glühung unter trockenem Wasserstoff verwendet werden

Bei einer NiFe- Legierung kann eine Glühung zwischen 1000°C und 1200°C unter trockenem Wasserstoff, beispielweise 5h bei 1150°C verwendet werden.

Bei einer FeSi-basierten Legierung mit 2 bis 4,5 Gewichts-% von mindestens einem Element aus der Gruppe Si und Al, Rest Fe und unvermeidbaren Verunreinigungen kann eine Schlussglühung bei Temperaturen von typischerweise 850°C bis 1150°C unter trockenem Wasserstoff verwendet werden.

In einem Ausführungsbeispiel werden die Statorsegmente, insbesondere die Statorsegmente in Form eines Statorzahns, mit einem elektrisch leitenden Draht bewickelt und dann zu einem Stator zusammengebaut. In anderen Ausführungsbeispielen werden die Statorsegmente erst zu einem Stator zusammengebaut und der Stator wird mit einem elektrischen leitenden Draht bewickelt.

In einem Ausführungsbeispiel erstrecken sich die Finger beider Statorsegmente senkrecht zu der Stapelrichtung in einer radialen Richtung und der Finger des ersten Statorsegments und zumindest zwei Finger des zweiten Statorsegments werden in einer radialen Richtung zusammenfügt, sodass der Finger des ersten Statorsegments und zumindest zwei Finger des zweiten Statorsegments ineinandergreifen und das erste Statorsegment mit dem zweiten Statorsegment mechanisch koppeln.

In einem Ausführungsbeispiel erstrecken sich die Finger senkrecht zu der Stapelrichtung in einer Umfangsrichtung und der Finger des ersten Statorsegments und zumindest zwei Finger des zweiten Statorsegments werden in eine Umfangsrichtung zusammenfügt, sodass der Finger des ersten Statorsegments und zumindest zwei Finger des zweiten Statorsegments ineinandergreifen und das erste Statorsegment mit dem zweiten Statorsegment mechanisch koppeln.

Die Finger können eine Breite aufweisen, die kleiner ist als die Breite der Randseite, sodass Teile der Randseite des ersten Blechpakets, die keine Finger aufweisen, von einer benachbarten Randseite eines zweiten Blechpakets im Abstand stehen, während die Finger überlappen und eine Fügestelle bilden.

In manchen Ausführungsbeispielen weisen die Finger des ersten Statorsegments jeweils einen Ausschnitt und die Vertiefung des zweiten Statorsegments jeweils einen Vorsprung auf, wobei der Ausschnitt und der Vorsprung zusammengefügt werden, um die laterale Position der Finger und der Vertiefung sowie die gegenseitige laterale Ausrichtung der ersten und zweiten Statorsegmente zu bestimmen. Insbesondere weisen die Endflächen der Blechlamellen, die die Finger und Vertiefungen bilden, jeweils einen Ausschnitt oder einen Vorsprung auf, um die Ausschnitte der jeweiligen Finger und des Vorsprungs der jeweiligen Vertiefungen zu bilden.

Alternativ können die Finger des ersten Statorsegments jeweils einen Vorsprung und die Vertiefung des zweiten Statorsegments jeweils einen Ausschnitt aufweisen, wobei der Ausschnitt und der Vorsprung zusammengefügt werden, um die laterale Position des Fingers und der Vertiefung sowie die gegenseitige Ausrichtung der ersten und zweiten Statorsegmente zu bestimmen.

Die Statorsegmente können jeweils die Gestalt eines Statorzahns aufweisen, wobei die Statorzähne zu einem zylindrischen Stator zusammengefügt werden, oder ein Statorsegment kann die Gestalt eines Statorrings und mehrere Statorsegmente können jeweils die Gestalt eines Statorzahns aufweisen, wobei die Statorzähne miteinander zu einem zylindrischen Stator zusammengefügt werden und mit einer inneren Randseite des Statorrings zusammengefügt werden.

In einem weiteren Ausführungsbeispiel weisen die Statorsegmente jeweils die Gestalt eines Teils eines Statorrings mit mehreren Statorzähnen auf, wobei die Teile des Statorrings miteinander zu einem zylindrischen Stator zusammengefügt werden. In diesem Ausführungsbeispiel weist jede Blechlamelle einen gebogenen Teil des Statorrings sowie mehrere integrale herausragende Teile auf, die die Statorzähne bilden,

Ausführungsbeispiele werde nun anhand der beiliegenden Zeichnungen und Beispiele näher erläutert.
- Figur 1: zeigt eine schematische Darstellung einer elektrischen Maschine mit einem Stator und einem Rotor.
- Figur 2: zeigt eine Draufsicht (links und rechts) auf zwei unterschiedliche Einzelbleche und in der Mitte auf zwei aufeinanderliegende, unterschiedliche Bleche für einen erfindungsgemäßen Stator.
- Figur 3a: zeigt eine seitliche Ansicht der Einzelzähne eines erfindungsgemäßen Stators.
- Figur 3b: zeigt eine seitliche Ansicht der miteinander verzahnten Einzelzähne eines erfindungsgemäßen Stators.
- Figur 3c: zeigt eine schematische Darstellung des Flussverlaufs in der Fügestelle der Figur 3b.
- Figur 4: zeigt einen erfindungsgemäßen Statorring mit einem erfindungsgemäß gestalteten Statorzahn, der in den Statorring gesteckt werden kann.
- Figur 5: zeigt einen schematischen Ablauf der Fertigung eines Stators aus Einzelzähnen.
- Figur 6: zeigt einen schematischen Ablauf verschiedener Fertigungswege eines Einzelzahns aus beschichtetem Band.
- Figur 7: zeigt ein Ausführungsbeispiel für unterschiedlich gestaltete Bleche, die abwechselnd gestapelt werden.
- Figur 8: zeigt ein Ausführungsbeispiel für unterschiedlich gestaltete Bleche, die abwechselnd gestapelt werden, wobei jeweils mehrere Bleche der gleichen Form aufeinander liegen.
- Figur 9: zeigt eine Darstellung des Statorring-Statorzahn-Fügesystems mit wechselseitig gestalteten Blechen vor dem Fügen.
- Figur 10: zeigt eine Darstellung des Statorring-Statorzahn-Fügesystems mit wechselseitig gestalteten Blechen der Figur 9 nach dem Fügen.
- Figur 11: zeigt eine Darstellung einer Randseite eines Statorsegments nach einem weiteren Ausführungsbeispiel.
- Figur 12: zeigt eine Draufsicht zweier Statorsegemente mit jeweils mehreren Statorzähnen.
- Figur 13: zeigt eine perspektivische Ansicht der Statorsegmente der Figur 12.
- Figur 14: zeigt eine weitere perspektivische Ansicht der Statorsegmente der Figur 12.

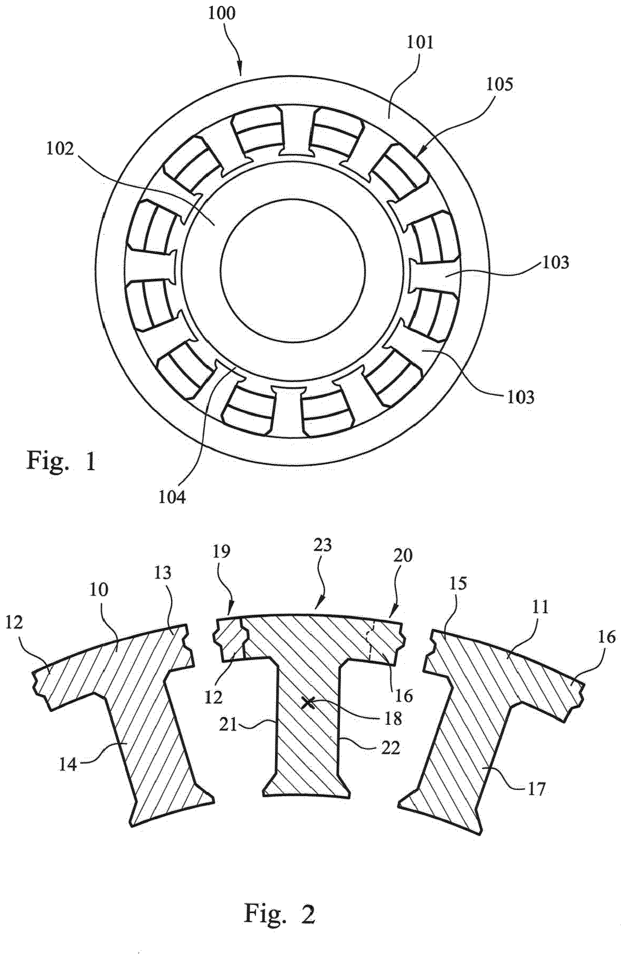

Figur 1 zeigt eine schematische Darstellung eines beispielhaften elektrischen Motors 100 mit einem Stator 101 aus einer weichmagnetischen Legierung und einem Rotor 102. Der Rotor 102 ist über einen Luftspalt 104 vom Stator 101 umgeben. Der Stator 101 ist aus mehreren Statorsegmenten 103 zusammengebaut, wobei die radialen Segmente 103 herkömmlich als Zähne bezeichnet werden. Die Zähne 103 sind gleichmäßig verteilt und mit Wicklungen 105 bewickelt. Üblicherweise weist der Rotor 102 eine Mehrzahl von Permanentmagneten auf, welche durch einen Luftspalt getrennt an gegenüberliegenden elektromagnetisch erregbaren Polen des Stators 101 vorbei rotieren. Die elektromagnetisch erregbaren Pole sind dabei z.B. als Statorzähne aus einem weichmagnetischen Material ausgebildet, um deren Zahnkern eine Spulenwicklung bei Bestromung ein Magnetfeld induziert. Durch getaktete Bestromung der Statorzähne 103 bzw. deren Spulenwicklungen 105 wird das Drehmoment auf den Rotor 102 eingeleitet.

Durch das Zusammenfügen der getrennten Segmente 103 des Stators 101 entsteht ein zusätzlicher Luftspalt zwischen den Segmenten. Ein solcher Luftspalt führt in der Anwendung zu einer Absenkung der magnetischen Leitfähigkeit (Permeabilität) im magnetischen Kreis. In Folge dessen sind höhere Ströme in der Wicklung notwendig, um die für die Anwendung notwendige Flussdichte zu erzielen. Um die daraus resultierende Erwärmung der Wicklungen zu reduzieren, muss wiederum der Querschnitt der Wicklung erhöht werden, was zum einen nicht immer möglich ist, zum anderen aber stets mit Mehrkosten verbunden ist.

Die Erfindung betrifft die Herstellung von Statorsegmenten aus Blechpaketen, die zumindest eine Randseite mit herausragenden Teilen aufweisen sowie das Herstellen eines mehrteiligen Stators aus diesen Statorsegmenten.

Mit Hilfe dieser herausragenden Teile der Blechpakete können die Segmente miteinander fixiert werden. Diese herausragenden Teile sind durch die Außenkontur der Blechlamellen geformt. Durch ihre Bauweise haben die erfindungsgemäßen Statorsegmente die folgenden Vorteile:
eine durchgängiger Luftspalt wird vermieden,
nur ein geringer Druck beim Montieren ist notwendig, sodass Spannungen im Material verringert werden können, und
es besteht eine Eigenstabilität der miteinander verbundenen Segmente, sodass eine Montagehilfe entfällt bzw. deutlich einfacher ausfällt.

Durch das Aufsetzen unterschiedlich geformter Einzelbleche werden Statorsegmente hergestellt, die ineinandergeschoben werden können. Dadurch kann eine Verbindung hergestellt werden, die die Segmente fixiert. Aus magnetischer Sicht ist vorteilhaft, dass durchgängige Luftspalte vermieden werden.

Die Blechlamellen oder Einzelbleche können durch Stanzen oder Laserschneiden hergestellt werden. Das Paketieren der Blechlamellen oder Einzelbleche zu einem Blechpaket kann durch Kleben, Schweißen oder Stanzpaketieren durchgeführt werden.

Der Stator kann verschieden Bauweisen haben, sodass er bei verschiedenen Bauweisen elektrischer Maschinen eingesetzt werden kann. Das Verfahren kann auch bei der Herstellung von Statoren für Linearmotoren eingesetzt werden, d.h. es ist nicht zwingend eine runde Form des Stators notwendig.

Figur 2 zeigt eine Draufsicht auf zwei unterschiedliche Blechlamelle 10, 11 (links und rechts), die jeweils eine T-Form aufweisen. In der Mitte werden die zwei unterschiedlichen Blechlamellen 10, 11 aufeinanderliegend gezeigt.

Die erste Blechlamelle 10 hat einen längeren Arm 12 an der linke Seite des horizontalen Teils als der Arm 13 an der rechte Seite der vertikalen Säule 14. Die zweite Blechlamelle 11 hat einen kürzeren Arm 15 an der rechten Seite des horizontalen Teils als der Arm 16 an der linken Seite der vertikalen Säule 17.

Wenn die zweite Blechlamelle 11 auf die erste Blechlamelle 10 gestapelt wird, wie in der Mitte der Figur 2 dargestellt ist, ist die Stapelrichtung 18 senkrecht zu der Hauptoberfläche der Blechlamellen 10, 11 und senkrecht zu der Ebenen der Zeichnung.

Die vertikalen Säulen 14, 17 haben die gleiche Außenkontur, sodass, wenn diese direkt aufeinander gestapelt sind, der linke Arm 12 der ersten Blechlamelle 10 über den linken Arm 15 der zweiten Blechlamelle 11 herausragt und einen Finger 19 bildet. Der rechte Arm 16 der zweiten Blechlamelle 11 ragt über den rechten Arm 13 der darunterliegenden ersten Blechlamelle 10 heraus, sodass dieser herausragende Teil ebenfalls einen Finger 20 bildet.

Wenn die Blechlamellen 10, 11 abwechselnd aufeinander gestapelt werden, entsteht ein Blechpaket 23 mit herausragenden Fingern 19, 20, die an gegenüberliegenden Randseiten 21, 22 des Blechpakets 23 und in unterschiedlichen Ebenen in der Stapelrichtung 19 angeordnet sind. Die Blechlamellen 10, 11 können zu einem Blechpaket 23 eines Statorzahns gestapelt werden.

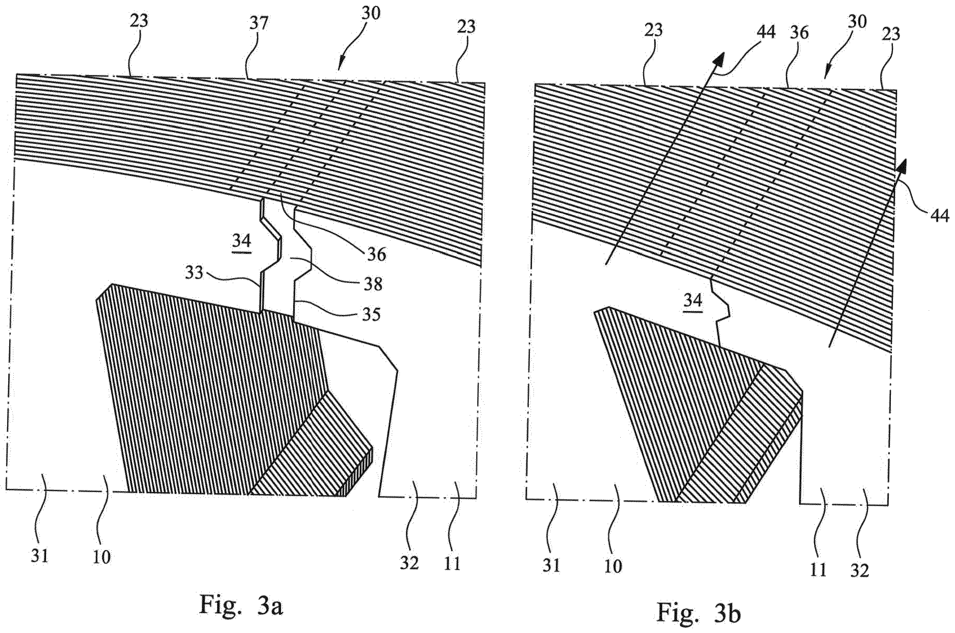

Die Figuren 3a und 3b zeigen jeweils eine seitliche Ansicht der Fügestelle 30 mit zwei miteinander verzahnten Einzelzähnen 31, 32, die jeweils aus einem Blechpaket mit einer Stapelrichtung 44 bestehen. Das Blechpaket kann das Blechpaket 23 aus den Blechlamellen 10, 11 sein, die in Figur 2 dargestellt ist.

Die Randseite 33 des ersten Statorzahns 31 weist mehrere Finger 34 auf, die aus Blechlamellen des Blechpakets des ersten Statorzahns 31 gebildet sind. Ebenfalls weist die Randseite 35 des zweiten Statorzahns 32 mehrere Finger 36 auf, die aus Blechlamellen des Blechpakets des zweiten Statorzahns 31 gebildet sind. Zwischen benachbarten Fingern 34 des ersten Statorzahns 30 ist eine Vertiefung 37 gebildet und zwischen den benachbarten Fingern 34 des zweiten Statorzahns 31 ist eine Vertiefung 38 gebildet.

In Figur 3a sind die Finger 34, 36 aufeinander gerichtet und in der Darstellung der Figur 3b greifen die Finger 34, 36 ineinander, um die Statorzähne 31, 32 miteinander mechanisch zu koppeln. Die Finger 34 des ersten Statorzahns 30 sind somit jeweils in der Vertiefung 38 des zweiten Statorzahns 31 und die Finger 36 des zweiten Statorzahns 31 sind somit jeweils in der Vertiefung 37 des ersten Statorzahns 30 angeordnet. Auf Grund der ineinander verschobenen Finger 34, 36 wird eine Fügestelle 30 zwischen den Statorzähnen 31, 32 bildet, in der die Finger 34, 36 überlappen.

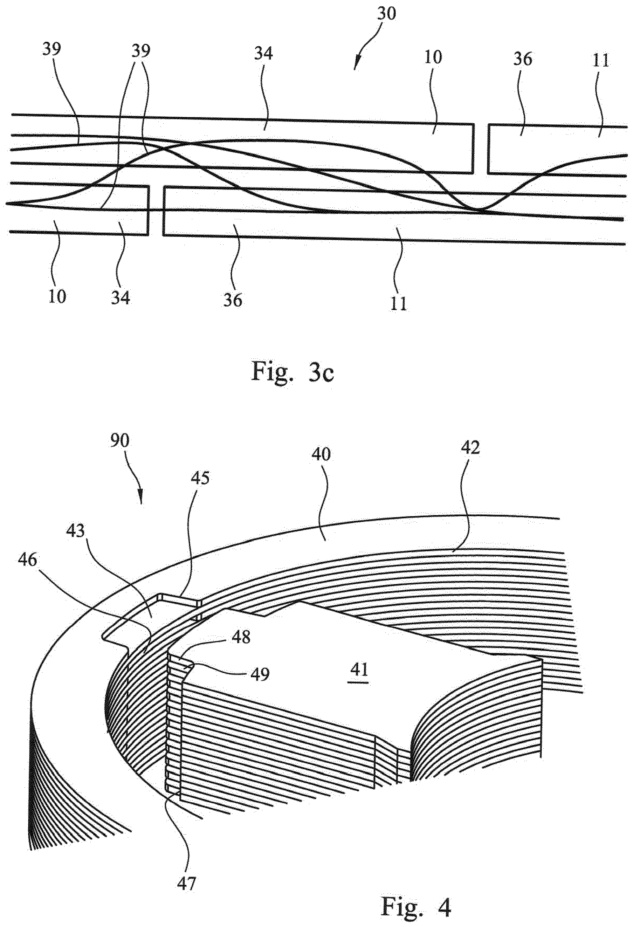

Figur 3c zeigt eine schematische Darstellung des Flussverlaufs 39 in der Fügestelle 30 der Figur 3b. Der magnetische Fluss bewegt sich in Blechebene und senkrecht zur Stapelrichtung 44 auch zwischen einer Blechlamelle 10 des Statorzahns 31 und einer Blechlamelle 11 des Statorzahns 32. Der Luftspalt zwischen der Blechlamelle 10 des Statorzahns 31 und der Blechlamelle 11 des Statorzahns 32 kann umgangen werden, wenn der Fluss 39 stattdessen die Blechebene wechselt und auf der benachbarten Blechlamelle 34 verläuft, bis er z.B. schließlich wieder hinter dem Übergang zwischen der Blechlamelle 10 des Statorzahns 31 und der Blechlamelle 11 des Statorzahns 32 auf die Ursprungs-Blechebene kommt, wie in der Figur 3c schematisch dargestellt ist. Dieser Weg ist magnetisch vorteilhaft, weil für den Wechsel auf die benachbarte Blechebene die Fläche des Bleches zur Verfügung steht, für den Wechsel auf das benachbarte Blech in der gleichen Blechebene aber nur der deutlich geringere Querschnitt am Übergang.

Figur 4 zeigt eine Ansicht eines Statorrings 40 und eines Statorzahns 41 eines Stators, die jeweils aus einem Blechpaket gebildet sind. Der Statorring 40 ist ein kreisförmiger Ring und weist eine innere Randseite 42 auf, die in einem Bereich so geformt ist, dass Finger 43 gebildet sind, die sich in Richtung des Mittelpunkts des Statorrings 40 erstrecken. Die Finger 43 sind aus einem Teilbereich der Blechlamelle gebildet. In diesem Ausführungsbeispiel ist jede zweite Blechlamelle mit einem Ausschnitt 45 in der inneren Randseiten vorgesehen, die in einer Vertiefung 46 zwischen den zwei benachbarten Fingern 43, d.h. die unten und oben liegenden Finger 43, liegt. Die Finger 43 sind aus Blechlamellen ohne Ausschnitt geformt und bilden die kreisförmige innere Randseite 42 des Statorrings 40.

Der Statorzahn 41 weist eine Randseite 47 mit herausragenden Fingern 48 auf, die eine Breite, eine Tiefe und eine vertikale Anordnung aufweisen, sodass sie mit den Fingern 43 des Statorrings ineinandergreifen können, um den Statorzahn 41 mit dem Statorring 40 mechanisch zu koppeln. Die Finger 48 sind jeweils aus einer Blechlamelle des Blechpakets des Statorzahns 41 gebildet und eine Vertiefung 49 ist durch die Endfläche der zwischen zwei benachbarten Fingern 48 angeordneten Blechlamelle des Blechpakets des Statorzahns gebildet. Die Finger 43 des Statorrings 40 sind nach dem Zusammenfügen der zwei Teilen in den Vertiefungen 49 des Statorzahns 41 und die Finger 48 des Statorzahns 41 sind in den Vertiefungen 46 des Statorrings 40 angeordnet.

Der Statorzahn 41 hat eine Breite, die größer als die Breite der Finger 48 und Vertiefungen 46 ist. Außerhalb der Finger 48 weist die Randseite 47 eine abgerundeten Kontur auf, die der kreisförmigen Kontur der inneren Randseite 42 des Statorrings 40 entspricht.

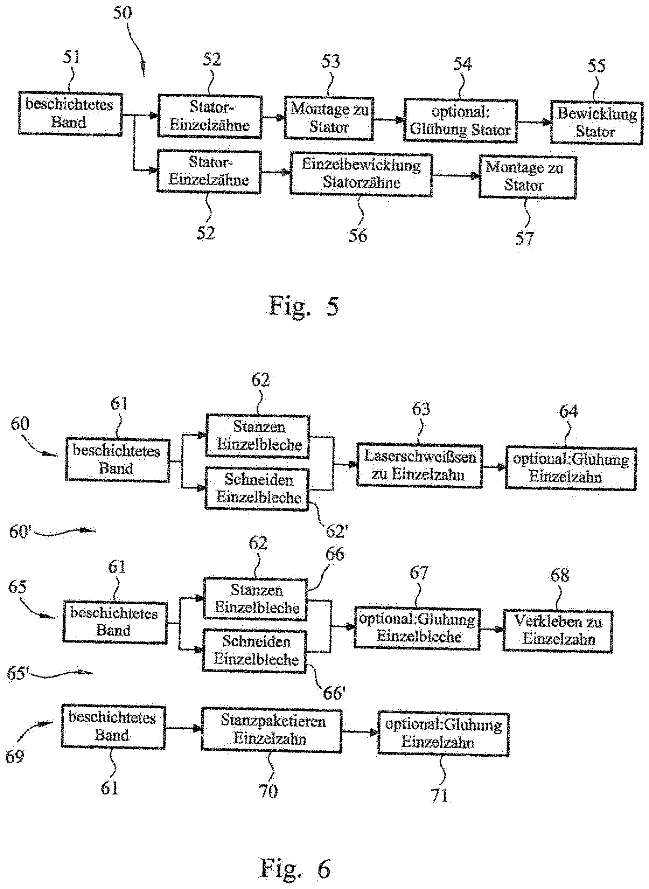

Figur 5 zeigt einen schematischen Ablauf 50 der Fertigung eines Stators aus Einzelzähnen. Im Kasten 51 wird ein Band aus einer weichmagnetischen Legierung bereitgestellt, das mit einer Isolierschicht beschichtet ist. Im Kasten 52 werden Einzelstatorzähne aus dem Band geformt und zu einem Blechpaket gestapelt und befestigt. Im Kasten 53 werden die Einzelstatorzähne zu einem Stator montiert. Im Kasten 54 wird optional eine magnetische Schlussglühung durchgeführt und schließlich wird im Kasten 55 der Stator bewickelt. Im alternativen Verfahren werden nach dem Kasten 52 im Kasten 56 die Einzelzähne vor der Montage einzeln bewickelt und im Kasten 57 zu einem Stator montiert. Im alternativen Verfahren entfällt die Schlussglühung des Stators und eine Schlussglühung erfolgt - sofern sie überhaupt notwendig ist - an den Einzelzähnen, d.h. nach Kasten 52.

Figur 6 zeigt einen schematischen Ablauf verschiedener Fertigungswege eines Einzelzahns aus beschichtetem Band. Das Band aus einer weichmagnetischen Legierung wird mit einem Isolationsmaterial beschichtet, die Einzelbleche bzw. Blechlamellen aus dem beschichteten Band geformt, gestapelt und miteinander verbunden, um ein Blechpaket mit der gewünschten Außenkontur herzustellen.

In einem Ausführungsbeispiel 60 wird das beschichtete Band im Kasten 61 bereitgestellt und im Kasten 62 werden die Einzelblechen aus dem Band gestanzt und mittels Laserschweißen zu einem Blechpaket zusammengefügt. Das Stanzwerkzeug hat unterschiedliche Einsätze. Die gestanzten Einzelbleche werden in einem nachfolgenden Schritt 63 durch Schweißen zu Einzelzähnen verbunden. Die so erhaltenen Einzelzähne können im Kasten 64 einzeln geglüht und anschließend zusammengefügt werden. Alternativ oder zusätzlich kann auch der zusammengefügte Stator geglüht werden.

In einem alternativen Ausführungsbeispiel 60' werden im Kasten 62' die Einzelbleche aus dem Band geschnitten und mittels Laserschweißen zu einem Blechpaket zusammengefügt.

Einzelbleche mit unterschiedlichen Geometrien werden durch Laserschneiden oder Wasserstrahlschneiden hergestellt. Die geschnittenen Einzelbleche werden in einem nachfolgenden Schritt 63 durch Schweißen zu Einzelzähnen verbunden. Die so erhaltenen Einzelzähne können im Kasten 64 einzeln geglüht und anschließend zu einem Stator zusammengefügt werden.

In einem Ausführungsbeispiel 65 werden im Kasten 66 die Einzelbleche aus dem Band gestanzt und mittels Kleben zu einem Blechpaket zusammengefügt. Das Stanzwerkzeug hat unterschiedliche Einsätze. Die gestanzten Einzelbleche werden im Kasten 67 zunächst geglüht. Nach der Glühung werden im Kasten 68 die Einzelbleche zu einem Einzelzahn geklebt. Die geklebten Einzelzähne werden anschließend zu einem Stator zusammengefügt.

In einem alternativen Ausführungsbeispiel 65' werden im Kasten 66' die Einzelbleche aus dem Band geschnitten und mittels Kleben zu einem Blechpaket zusammengefügt. Einzelbleche mit unterschiedlichen Geometrien werden im Kasten 66' durch Laserschneiden oder Wasserstrahlschneiden hergestellt. Die geschnittenen Einzelbleche werden im Kasten 67 zunächst geglüht. Nach der Glühung werden im Kasten 68 die Einzelbleche zu einem Einzelzahn geklebt. Die geklebten Einzelzähne werden anschließend zu einem Stator zusammengefügt.

In einem Ausführungsbeispiel 69 wird Stanzpaketieren im Kasten 70 verwendet. Die unterschiedlichen Geometrien der Einzelbleche werden durch steuerbare Stempel im Werkzeug hergestellt. Die Verbindung der Einzelzähne erfolgt durch Stanznoppen im Werkzeug. Die so erhaltenen Einzelzähne können im Kasten 71 einzeln geglüht und anschließend zusammengefügt werden. Alternativ oder zusätzlich kann auch der zusammengefügte Stator geglüht werden.

In einem weiteren Ausführungsbeispiel werden zunächst die Einzelbleche geglüht, um diese im Anschluss zu verschweißen. Das Glühen von Einzelblechen ist allerdings aufwändiger, außerdem besteht das Risiko, dass das Aufbringen der Schweißnaht nach der Schlussglühung die weichmagnetischen Eigenschaften verschlechtert.

Um das Zusammenfügen der Statorsegmente miteinander zu erleichtern, können die Finger zumindest 2 mm herausragen, damit eine Überlappung für eine Fixierung vorhanden ist. Die Oberflächenrauigkeit der Materialien sollte nicht zu hoch sein, damit die Einzelzähne einfach gesteckt werden können. Bei dünnen Blechen kann es vorteilhaft sein, jeweils mehrere Bleche eines Typs aufeinander zu stapeln, damit sich eine einfachere Fügbarkeit ergibt.

Weichmagnetische Materialien, die auch bei anderen Fertigungsverfahren genutzt werden, können verwendet werden, wie
- Kobalt-Eisen-Legierungen (CoFe) mit 49% Co 49% Fe, 2% V. Ein Beispiel ist VACODUR® 49.
- Kobalt-Eisen-Legierungen (CoFe) mit 17% Co 1,4% V, Rest Fe. Ein Beispiel ist VACOFLUX® X1.
- Nickel-Eisen-Legierungen (NiFe) mit 40 bis 50% Ni. Beispiele sind PERMENORM® 5000 V5, MEGAPERM 40® L und ULTRAVAC 44® V6.
- Silizium-Eisen-Legierungen (SiFe) mit 2-4% (Si+Al), Rest Fe. Ein Beispiel ist TRAFOPERM® N4. Für einen Motor wird nicht-kornorientiertes SiFe verwendet (NGO).

Je nach Wahl des weichmagnetischen Werkstoffs wird eine magnetische Schlussglühung zur Einstellung der weichmagnetischen Eigenschaften verwendet, wie zum Beispiel
- CoFe: Bei VACODUR® 49 eine Glühung von 6h 880°C unter trockenem Wasserstoff.
- CoFe: Bei VACOFLUX® X1 eine Glühung von 4h 1000°C mit langsamer Abkühlung von 30 K/h bis 900°C, Glühung unter trockenem Wasserstoff.
- NiFe: Bei MEGAPERM 40® L, PERMENORM® 5000 V5 und MEGAPERM 50 L eine Glühung zwischen 1000°C und 1200°C, typischerweise 5h 1150°C unter trockenem Wasserstoff.
- SiFe, "semi-processed": Schlussglühung bei Temperaturen von typischerweise 850°C bis 1150°C unter trockenem Wasserstoff. TRAFOPERM® N4: 5h 1150°C.
- SiFe, "fully-finished": keine weitere Schlussglühung notwendig. Diese wurde vom Hersteller bereits werkseitig durchgeführt.

Zur Durchführung einer Glühung weist das Band eine glühbeständige Beschichtung auf. Folgende Beschichtungen können verwendet werden:
- Bei CoFe ist dies eine anorganische Beschichtung, die nach der Glühung als MgO oder ZrO vorliegt
- Bei NiFe wird aufgrund der hohen Glühtemperaturen eine anorganische Beschichtung verwendet, die nach der Glühung als MgO oder ZrO vorzugsweise ZrO verwendet.
- Bei SiFe werden oft Backlacke verwendet, die nicht glühbeständig sind. Es existieren glühbeständige Beschichtungen mit einem gewissen anorganischen Anteil.

### Ausführungsbeispiele

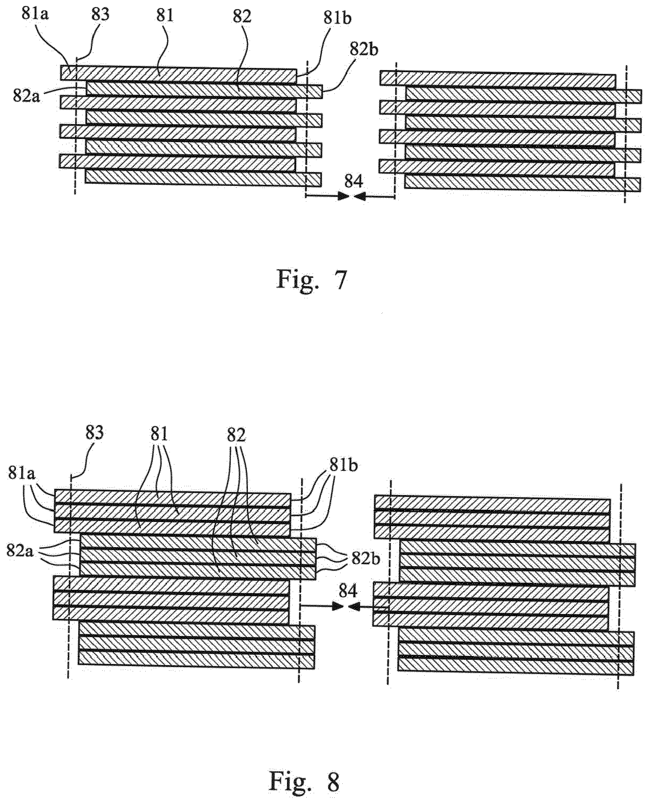

In einem Ausführungsbeispiel werden aus dem beschichten Band nun in einem Folgeverbundwerkzeug die Statorzähne in T-Form gestanzt. Das Werkzeug hat dazu zwei unterschiedliche Einsätze, so dass zwei unterschiedliche Blechgeometrien 81, 82 resultieren, wie in den Figuren 7 und 8 dargestellt ist.

Diese Blechgeometrien 81, 82 unterscheiden sich wie folgt: Der erste Blechtyp 81 weist auf der linken Seite des T-Segments eine längere Seite 81a und auf der rechten Seite des T-Segments 81b eine kürzere Seite auf. Die entsprechende Verlängerung bzw. Kürzung gegenüber einer gedachten Ausgangslinie 83 ist dabei identisch. Der zweite Blechtyp 82 ist nun hinsichtlich des Verbindungssystems spiegelbildlich ausgeführt, d.h. die rechte Seite des T-Segments 82b weist eine längere Seite auf, während die linke Seite des T-Segments 82a die kürzere Seite darstellt. Auch hier sind Längung bzw. Kürzung gegenüber der gedachten Ausgangslinie 83 identisch

Figur 7 zeigt ein Ausführungsbeispiel eines Blechpakets, bei dem der erste Blechtyp 81 und der zweite Blechtyp 82 abwechselnd gestapelt werden. Jede Lage des Blechpakets weist somit einen herausragenden Teil oder Finger auf, wobei sich der herausragende Teil benachbarter Lagen in gegensätzliche Richtungen erstreckt.

Figur 8 zeigt ein Ausführungsbeispiel, bei dem jeweils mehrere Bleche der gleichen Form aufeinander liegen. In diesem Ausführungsbeispiel wird zur besseren Montierbarkeit die Anzahl der Fügestellen reduziert, indem stets mehrere Bleche eines Typs 81, 82 aufeinandergestapelt werden, sodass jeder Finger durch mehrere Bleche eines Typs gebildet wird. Bei einer Banddicke von 0,20 mm sind dies, wie in Figur 8 abgebildet, jeweils drei Bleche. In einem weiteren Beispiel werden 5 Bleche je Typ verwendet. Bei einer noch geringeren Banddicke von 0,10 mm verwendet man z.B. 10 Bleche je Typ.

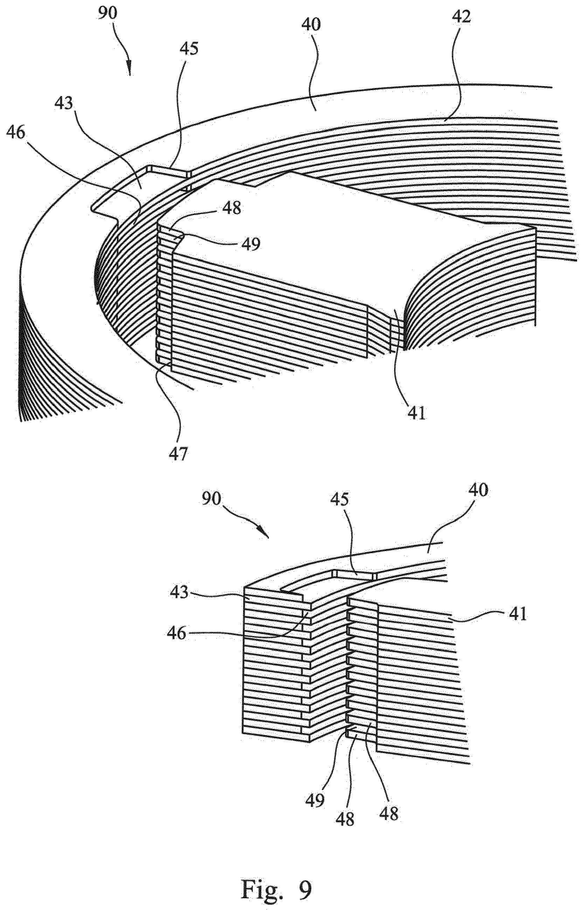

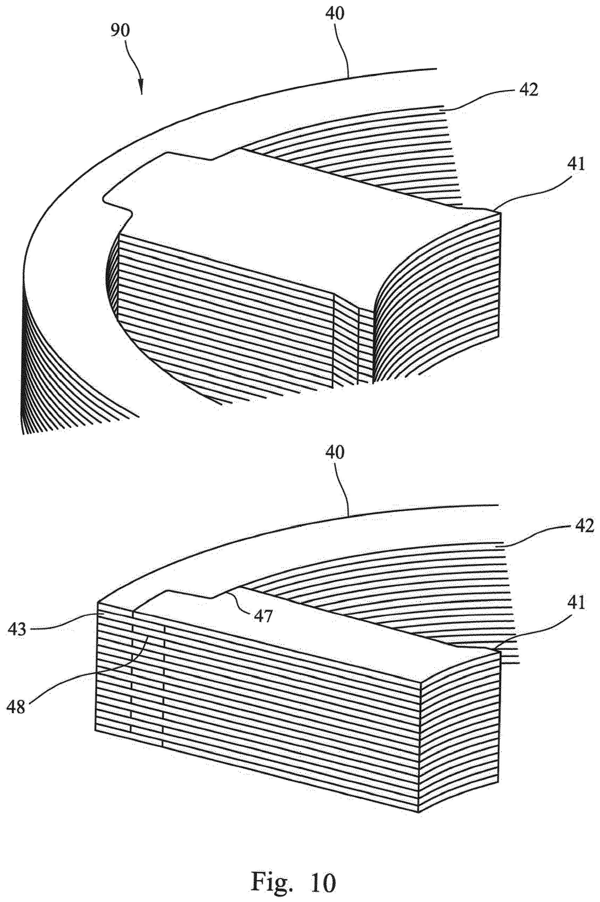

Figur 9 zeigt eine vergrößerte Darstellung des Statorring-Statorzahn-Fügesystems 90, wobei der Statorring 40 und Statorzahn 41 die Form, wie in der Figur 4 dargestellt ist, vor dem Fügen zeigt. Figur 10 zeigt eine Darstellung des Statorring-Statorzahn-Fügesystems 90 der Figur 9 nach dem Fügen. Figur 10 zeigt, dass die Finger 48 des Statorzahns 41 in der Vertiefungen 46 des Statorrings 40 angeordnet sind, sodass die Blechlamellen eine gemeinsame Lage des Stators bilden. Ebenfalls sind die Finger 43 des Statorrings 40 in den Vertiefungen 49 des Statorzahns 41 angeordnet, so dass die Blechlamellen eine gemeinsame Lage des Stators bilden. Der Überlapp zwischen den Fingern 43, 48 der zwei Segmente 40, 41 ist in Figur 10 mit den gestrichelten Linien dargestellt.

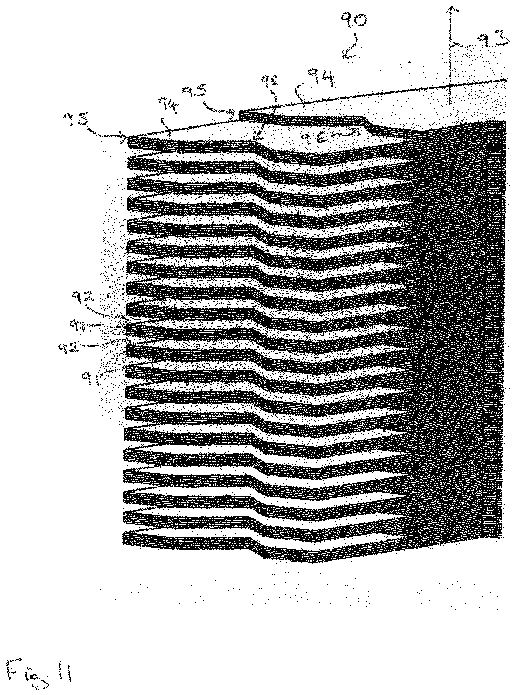

Figur 11 zeigt eine Darstellung einer Randseite eines Statorsegments 90, die herausragende Finger 91 aufweist, sodass in der Stapelrichtung 93 zwischen benachbarten Fingern 91 eine Vertiefung 92 gebildet ist. Die Finger 91 und auch die Vertiefungen 92 sind jeweils aus vier Blechlamellen 94 in diesem Ausführungsbeispiel gebildet. Die jeweiligen Finger 91 sowie die Vertiefungen 92 können jedoch eine beliebige Anzahl von Blechlamellen aufweisen, um eine gewünschte Dicke der Finger 91 bzw. Vertiefungen 22 bereitzustellen.

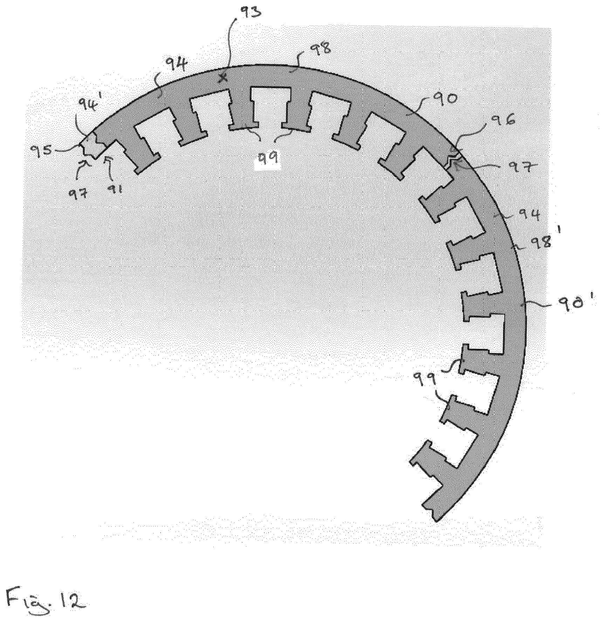

Die Blechlamellen 94 haben eine Endkontur 95 mit einem Ausschnitt 96, der mit einem Vorsprung 97 einer Blechlamelle 94' eines benachbarten Statorsegments 90' zusammengefügt wird, wie in den Figuren 12 bis 14 gezeigt ist. Folglich kann die laterale Anordnung der Finger 91 und Vertiefungen 92 sowie der zwei Statorsegmente 90, 90' mithilfe der mechanischen Kopplung zwischen dem Ausschnitt 96 und dem Vorsprung 97 der Blechlamellen 94, 94' bestimmt werden, wobei unter "lateral" die Anordnung in Richtungen quer zu der Stapelrichtung 93 zu verstehen ist. In manchen Ausführungsbeispielen hat der Ausschnitt 96 bzw. der Vorsprung 97 eine runde, beispielsweise eine halbrunde Form, oder eine U-Form oder eine rechteckige oder quadratische Form. Im Ausführungsbeispiel der Figur 11 hat der Ausschnitt 97 eine Spitze oder V-Form.

Figur 12 zeigt eine Draufsicht des Statorsegments 90, aus der ersichtlich ist, dass die Blechlamellen 94 des Statorsegments 90 jeweils eine Außenkontur aufweisen, die einen gebogenen Teil 98 eines Statorrings mit einer Bogenlänge und mehrere senkrecht zu der Bogenlänge angeordnete Teile bereitstellt, die Statorzähne 99 bilden. Die Statorzähne 99 liegen in der gleichen Ebene der Blechlamelle 94 wie der gebogener Teil 98. Die Statorzähne 99 des Statorsegments 90 sind integral mit dem gebogenen Teil 98 ausgebildet. Der Teil 98 hat eine gebogene Form, wobei sich die Statorzähne 99 von der Innenseite bzw. kürzeren Seite des Teils 98 erstrecken. Mehrere Teile 98 können zusammengefügt werden, um einen kreisförmigen Statorring zu bilden, wobei die Statorzähne 99 regelmäßig um die Innenseite des Statorrings angeordnet sind und sich in Richtung des Mittelpunks des kreisförmigen Statorrings erstrecken.

Ähnlich zum Ausführungsbeispiel der Figur 2 weisen die gegenüberliegenden Endflächen der Blechlamelle 94 des gebogenen Teils 98 einen Ausschnitt 96 bzw. einen Vorsprung 97 auf, um die Vertiefungen 92 bzw. Finger 91 der Randseiten des Statorsegments 90 zu bilden. Ähnlich zum Ausführungsbeispiel der Figur 2 werden zwei Blechlamellenformen 94, 94' gezeigt, wobei die erste Blechlamelle 94' einen längeren linken Arm und einen kürzeren rechten Arm und die zweite Blechlamelle 94 einen kürzeren linken Arm und einen längeren rechten Arm hat, sodass, wenn die zwei Blechlamellen 94, 94' aufeinander in der Stapelrichtung 93 gestapelt sind, um das Statorsegment zu bilden, wie in Figur 12 dargestellt ist, die Finger 91 an gegenüberliegenden Randseiten des Teils 98 und in unterschiedlichen Ebenen gebildet sind und sich in gegensätzliche Richtungen in der Umfangsrichtung erstrecken. Die Startorzähne 99 der zwei Blechlamellen 94, 94'weisen jeweils die gleichen Außenkontur auf und sind derart aufeinander gestapelt, dass die Randseiten der Statorzähne 99 sowie Innenseite und Außenseite des Teils 98 des Statorrings eine ebene Fläche bilden und keine Finger und Vertiefungen aufweisen.

Mehrere Statorsegmente 90, 90', von denen zwei in Figur 12 dargestellt sind, werden bereitgestellt. Die mehreren Statorsegmente 90, 90' weisen jeweils ein Teil 98 eines Statorrings mit mehreren integralen Statorzähnen 99 auf und werden zusammengefügt, um einen geschlossenen, beispielsweise kreisförmigen Statorring und den Stator zu bilden. Diese Statorsegmente 90, 90' können die gleichen oder unterschiedlichen Bogenlängen und somit die gleiche oder unterschiedliche Anzahl an Statorzähnen 99 aufweisen.

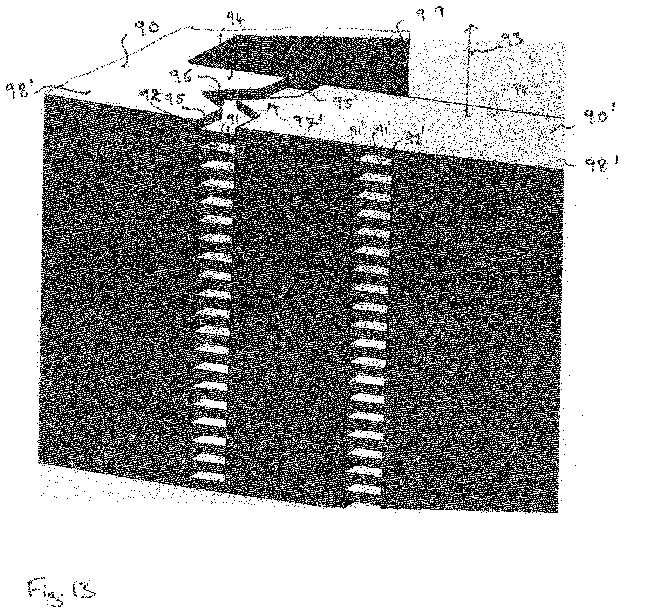

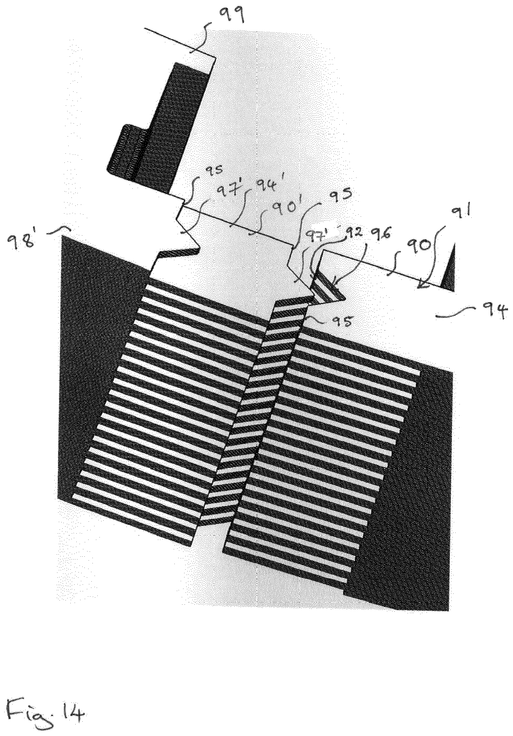

Wie auch in den perspektivischen Ansichten der Figuren 13 und 14 dargestellt ist, werden die Finger 91 benachbarter Randseiten der Teile 98, 98'des Statorrings ineinander verschoben, sodass die Finger 91 eines Statorsegments 90 zwischen den Fingern 91' des benachbarten Statorsegments 90' angeordnet sind und in der Vertiefungen 92' des zweiten Statorsegments 90' angeordnet sind. Die V-förmigen Vorsprünge 97' des ersten Statorsegments 90' sind in dem V-förmigen Ausschnitt 96 des benachbarten Statorsegments 90 angeordnet, um die gegenseitige laterale Ausrichtung der Statorsegmente 90, 90' zu bestimmen.

### 1. Ausführungsbeispiel

Im ersten Ausführungsbeispiel werden Statorzähne aus einer CoFe Legierung hergestellt. Als Vormaterial wird VACODUR® 49 verwendet mit 49% Co, 49% Fe, 1,9% V und 0,1% Nb. Ein Band aus der Legierung wurde wie folgt hergestellt: Erschmelzen im Vakuum, Vorblocken, Warmwalzen an 2 mm, Abschrecken im Salz-Eiswasserbad von oberhalb 730°C, Kaltwalzen an Enddicke 0,20 mm, ggf. Besäumen bzw. Schneiden auf Endbreite.

Optional kann an Enddicke noch eine Glühung im Durchlauf unter trockener H₂-Atmosphäre erfolgen, d.h. kurzes Erwärmen des Bands auf eine Temperatur von mindestens 700°C und schnelles Abkühlen mit einer Abkühlrate von mindestens 1000 K/h. Dieser Schritt dient dazu, einen Teil der Ordnungseinstellung vorwegzunehmen und somit das Längenwachstum, das bei einer anschließenden Schlussglühung des Materials stattfindet, teilweise vorwegzunehmen. Zur besseren Einstellung des Gefüges kann vor der Glühung im Durchlauf optional noch eine stationäre Glühung unter trockener H₂-Atmosphäre bei Temperaturen von mind. 650°C stattfinden.

Das so erhaltene Band wird an Enddicke mit einer Mg-Methylat-Lösung beschichtet, die sich durch einen Trockenprozess bei etwa 200°C teilweise in Magnesiumhydroxid umwandelt. Bei der späteren Schlussglühung findet eine weitere Kalzinierung statt, sodass die Beschichtung am fertig geglühten Band vorwiegend als Magnesium-Oxid vorliegt. Diese Beschichtung dient einerseits als elektrische Isolierung, um die Wirbelstromverluste im Stator gering zu halten. Weiterhin verhindert sie das Verschweißen von Bandlagen während der späteren Schlussglühung.

In einem Ausführungsbeispiel werden aus dem beschichten Band zwei unterschiedliche Blechgeometrien in T-Form für die Statorzähne gestanzt und gestapelt, wie zum Beispiel in Figur 7 oder Figur 8 dargestellt ist, damit gegenüberliegende Randseiten der jeweiligen Statorzähne herausragende Finger aufweisen, sodass die Finger benachbarter Statorzähne ineinandergreifen, um die Statorzähne zusammenzufügen.

Die Einzelbleche werden anschließend durch Laserschweißen miteinander verbunden. Die Anzahl der Laserschweißnähte wird dabei in Abhängigkeit von der Geometrie so gewählt, dass eine ausreichende Verbindungsfestigkeit über die Höhe vorliegt.

In einer Variante werden die T-förmigen Statorzähne in einem Stanzpaketierwerkzeug hergestellt. Dabei wird in dem Werkzeug die Kontur ausgestanzt und die Verbindung der einzelnen Lagen durch Noppen hergestellt. Durch steuerbare Stempel in dem Werkzeug kann man die benötigten unterschiedlichen Konturen herstellen sowie die Lagenzahl und damit die Höhe der Zähne bestimmen. Dieser Fertigungsweg ist besonders gut geeignet für größere Stückzahlen.

Die Statorzähne werden schließlich noch einer magnetischen Schlussglühung unterzogen. Diese findet z.B. in einem Haubenofen unter trockener Wasserstoffatmosphäre statt. Der Taupunkt liegt dabei unterhalb von -30°C, bevorzugt unterhalb von -50°C, damit es am CoFe-Material während der Glühung nicht zur Bildung von Oxiden kommt. Als Glühtemperatur wird in diesem Beispiel 6h 880°C gewählt, um eine Rekristallisation mit anschließendem Kornwachstum zu gewährleisten und so die gewünschten weichmagnetischen Eigenschaften einzustellen, wie geringe Koerzitivfeldstärke und hohe Permeabilität.

In einem weiteren Beispiel kann diese Glühung der Statorzähne auch im Durchlauf stattfinden, wobei Temperatur und Zeit gegebenenfalls unter Berücksichtigung von Ofenlänge und Geschwindigkeit angepasst werden müssen.

Die geglühten Statorzähne werden nun einzeln bewickelt, z.B. durch die Linearwickeltechnik oder die Flyerwickeltechnik.

Die geglühten und bewickelten Statoreinzelzähne werden nun miteinander montiert, indem sie ineinandergesteckt werden, wie in den Figuren 7 und 8 mit den Pfeilen 84 schematisch dargestellt ist. Dies funktioniert ähnlich einem Nut- und Federsystem, wobei Nuten und Federn durch die wechselnde Länge aufeinanderliegender Bleche resultiert. Aufgrund dieses Systems ist das Ineinanderschieben sehr gut möglich.

Die Feinausrichtung des fertigen Stators kann mit Hilfe eines Montagewerkzeugs erfolgen, z.B. Kabelbinder oder Schlauchschellen, die über die Höhe verteilt um den Stator herum befestigt werden. Durch Anziehen bzw. definiertes Festdrehen kann der Außendurchmesser auf das gewünschte Maß eingestellt werden.

In einem weiteren Ausführungsbeispiel werden nicht die Statorzähne einzeln geglüht, sondern die ungeglühten Statorzähne werden zuerst ineinandergesteckt. Der fertige Stator kann nun mit Hilfe eines Montagewerkzeugs bei Bedarf noch genauer ausgerichtet werden. Anschließend wird der komplette Stator aus den gesteckten Einzelzähnen einer magnetischen Schlussglühung unterzogen. Diese unterliegt den gleichen Bedingungen wie oben für die Statorzähne ausgeführt. Der fertig geglühte Stator wird nun mit den notwendigen Wicklungen versehen.

### 2. Ausführungsbeispiel

Um Statorzähne aus SiFe inkl. Schlussglühung herzustellen, wird als Vormaterial nichtschlussgeglühtes, nicht-kornorientiertes Elektroband verwendet. In dem Ausführungsbeispiel ist dies das Material TRAFOPERM® N4 (VAC) mit einer Banddicke von 0,20 mm. Das Material weist die Zusammensetzung Fe 2,4% Si 0,35% Al und Zusätze von bis zu 0,2% Mn zur Desoxidation auf. Das Material muss nach der Formgebung noch einer magnetischen Schlussglühung unterzogen werden.

Das Band wird an Enddicke mit einer Mg-Methylat-Lösung beschichtet, analog zum ersten Ausführungsbeispiel. Diese Beschichtung ist beständig bis etwa 1050°C. Alternativ kann auch eine ZrO-Beschichtung verwendet werden, welche als Zirkonpropylat aufgebracht wird und nach der Schlussglühung als festhaftende Zirkonoxid-Beschichtung vorliegt. Diese Beschichtung hat den Vorteil einer höheren Temperaturbeständigkeit, so dass Glühtemperaturen bis 1150°C möglich sind und die Beschichtung erhalten bleibt.

Das Stanzen oder Stanzpaketieren kann analog zum ersten Ausführungsbeispiel erfolgen, ebenso die verschiedenen Möglichkeiten zur Glühung (Glühung der Einzel-Statorzähne oder Glühung des gesamten Statorpakets). Für eine stationäre Glühung wird für das Material eine Temperatur von 1150°C bei einer Glühzeit von 5h unter trockener Wasserstoffatmosphäre gewählt, um die niedrigste Koerzitivfeldstärke und damit niedrige Hystereseverluste im Material einzustellen. In einem weiteren Beispiel wird bei einer Temperatur von 850°C für die Dauer von 5h geglüht, wodurch höhere Induktionen resultieren.

Wichtig ist hierbei die Einhaltung eines niedrigen Taupunkts <-30°C, da sich auf Grund des Si- und Al-Anteils in der Legierung ansonsten eine Siliziumoxid- oder Aluminiumoxid-Schicht ausbildet. Diese weisen eine erhöhte Oberflächenrauigkeit auf, so dass das Ineinanderstecken der Bleche erschwert oder sogar verhindert wird.

### 3. Ausführungsbeispiel

Um Statorzähne aus fertigen SiFe (fully-finished) Blechen herzustellen, wird als Vormaterial bereits vorgeglühtes Eisen-Silizium verwendet. Dieser Zustand wird auch als "fully-finished" bezeichnet. Ein Beispiel ist die Elektrobandqualität NO20-1200H (Fa. Cogent Power) mit einer Banddicke von 0,20 mm. Dieses Material weist auf Grund seiner Zusammensetzung, Fe mit 3-5% (Si+Al), einen hohen elektrischen Widerstand von mehr als 0,50 µΩm auf. In Kombination mit der geringen Banddicke ergeben sich sehr niedrige Ummagnetisierungsverluste, weshalb dieses Material sehr gut geeignet ist für Anwendungen mit hohen elektrischen Frequenzen.

In einem Beispiel wird das Band mit einer herstellerseitig aufgebrachten anorganischen Beschichtung versehen (Handelsname SURALAC® 7000, der Firma Cogent Power), die eine typische Dicke von unter einem µm aufweist. Aus dem Band werden nun analog zur obigen Vorgehensweise bei CoFe Lamellen in T-Form gestanzt. Die Verbindung der einzelnen Lamellen zu einem Zahn erfolgt entweder beim Stanzen durch einen Stanzpaketierprozess oder aber im Anschluss an das Stanzen durch Laserschweißen.

In einem weiteren Beispiel wird das Band mit einer herstellerseitig aufgebrachten organischen Beschichtung auf Epoxidbasis versehen (SURALAC® 9000), auch als Backlack bekannt. Aus dem Band werden in einem Werkzeug die Statorzähne in T-Form gestanzt. Das Werkzeug hat dazu unterschiedliche Einsätze, sodass unterschiedliche Blechgeometrien resultieren.

Die Bleche werden nun gestapelt und in einer speziellen Wärmebehandlung unter Druck und erhöhter Temperatur mit Hilfe der Backlackbeschichtung miteinander verbunden. Dabei findet zunächst ein Aufschmelzen der Beschichtung statt, wodurch sich die Beschichtungen benachbarter Bleche miteinander verbinden können. Bei etwas erhöhter Temperatur härtet der Backlack aus, sodass ein Statorzahn aus fest miteinander verbundenen Lamellen resultiert. Die genauen Temperaturen und Drücke für diesen Prozess sind abhängig vom verwendeten Backlack.

Die verbackenen Statorzähne werden nun einzeln bewickelt, z.B. durch die Linearwickeltechnik oder die Flyerwickeltechnik. Anschließend werden die Zähne zum Stator montiert.

Diese Ausführungsbeispiele können zur Herstellung andere Statorkomponenten bzw. Segmente verwendet werden, wobei eine Statorkomponente ein Statorzahn oder Statorring oder ein Teil eines Statorrings mit mehreren Statorzähnen sein können. Unterschiedliche Komponenten können aus unterschiedlichen Materialien gebildet sowie mit unterschiedlicher Weiterverarbeitung hergestellt werden.

### 4. Ausführungsbeispiel

Um Statorzähne (I-Segmente) aus CoFe und einen Statorring aus SiFe herzustellen, wird für den Statorring als Vormaterial hier Eisen-Silizium verwendet, z.B. mit ZrO-beschichtetes TRAFOPERM N4 mit einer Banddicke von 0,20 mm, wie es im dritten Ausführungsbeispiel verwendet wird. Aus dem SiFe-Band werden in einem Werkzeug mittels Gesamtschnitt Statorringe herausgestanzt, wobei durch steuerbare Stempel zwei unterschiedliche Blechsorten im Wechsel gefertigt werden. Die erste Blechsorte (A) weist die Form eines durchgehenden Rings auf. Die zweite Blechsorte (B) entspricht einem Ring mit identischem Außen- und Innendurchmesser, wobei im Innendurchmesser rechteckige oder trapezförmige Einbuchtungen vorgesehen werden. Durch wechselseitige Stapelung dieser Bleche, z.B. in der Folge ABAB... oder auch in der Folge AABBAABB... werden Einbuchtungen erzeugt, in die die Statorzähne später gesteckt werden können.

Die Bleche für den Statorring können z.B. im Werkzeug direkt stanzpaketiert werden, oder aber auch außerhalb des Werkzeugs mittels Laserschweißen verbunden werden. In beiden Fällen wird der fertige Statorring als Ganzes noch magnetisch schlussgeglüht, z.B. stationär bei 1150°C bei einer Glühzeit von 5h unter trockener Wasserstoffatmosphäre.

Als Vormaterial für die I-förmigen Statorzähne wird VACOFLUX 48 verwendet, eine CoFe-Legierung mit 49% Co, 49% Fe und 1,9% V. Die Verwendung von CoFe für dieses Teil ist sinnvoll, da auf diese Weise ein höherer magnetischer Fluss durch die Statorzähne geleitet werden kann.

Das Band für die Statorzähne weist die gleiche Dicke auf wie das Vormaterial für den Statorring. Es liegt ebenfalls eine glühbeständige Beschichtung vor, allerdings nicht notwendigerweise die gleiche. In diesem Beispiel wird eine Lösung auf Basis von Mg-Methylat verwendet, wie im ersten Ausführungsbeispiel.

Die Statorzähne werden nun in einem Werkzeug gestanzt, wobei auch hier wieder durch steuerbare Stempel zwei unterschiedliche Blechsorten im Wechsel gefertigt werden. Die beiden Blechsorten (A) und (B) unterscheiden sich insofern, dass die Blechsorte (B) noch eine zusätzliche Fläche aufweist, die deckungsgleich mit der rechteckigen oder trapezförmigen Einbuchtung des Statorring-Blechs (B) ist. Damit stellen die Bleche A von Statorring und Statorzahn jeweils ein passendes Paar dar, ebenso wie die jeweiligen Bleche B.

Die Bleche für die Statorzähne werden in diesem Beispiel nach dem Stanzen in der gleichen Folge aufeinandergestapelt, wie es beim Statorring der Fall war, also z.B. in der Folge ABAB... oder der Folge AABBAABB... Anschließend werden die Bleche miteinander verbunden, z.B. durch eine oder mehrere Laserschweißnähte. Die so gefügten Statorzähne werden nun einer Wärmebehandlung unterzogen, um die magnetischen Eigenschaften einzustellen, z.B. 10h 880°C unter trockenem Wasserstoff.

In einem weiteren Beispiel werden die gestapelten Bleche zu Statorzähnen verklebt durch Verwendung eines Kapillarklebers, der sich in die Zwischenlagen zieht und für eine gute Haftung der Bleche sorgt. In diesem Fall muss die Wärmebehandlung vorab an den gestanzten Blechen erfolgen.

Die fertigen Statorzähne werden nun in den Statorring montiert, indem sie einfach ineinandergesteckt werden. Anschließend wird der Stator als Ganzes bewickelt. In einem weiteren Beispiel werden die Statorzähne zunächst einzeln bewickelt und die bewickelten Statorzähne werden dann in den Statorring durch Stecken montiert.

## Patentansprüche

1. Mehrteiliger Stator für eine elektrische Maschine, der
eine Vielzahl von Statorsegmenten (40, 41; 31, 32) aufweist,
wobei die Statorsegmente jeweils mehrere weichmagnetische Blechlamellen (10, 11) aufweisen, die aufeinander in einer Stapelrichtung (18) zu einem Blechpaket (23) gestapelt sind,
wobei an zumindest einer Randseite (33) des Blechpakets eines ersten Statorsegments (31) zumindest eine Blechlamelle herausragt und einen Finger (34) bildet, und an zumindest einer Randseite (35) des Blechpakets eines zweiten Statorsegments (32) zumindest zwei Blechlamellen herausragen und zumindest zwei Finger (36) bilden,
wobei der Finger (34) des ersten Statorsegments (31) und die zumindest zwei Finger (36) des zweiten Statorsegments (32) ineinandergreifen, um das erste Statorsegment (31) mit dem zweiten Statorsegment (32) mechanisch zu koppeln.

2. Stator nach Anspruch 1, wobei eine Vertiefung (38) zwischen den zwei Fingern (36) des zweiten Statorsegments (32) geformt wird und der Finger (34) des ersten Statorsegments (31) in der Vertiefung (38) des zweiten Statorsegments (32) angeordnet ist, um das erste Statorsegment (31) mit dem zweiten Statorsegment (32) mechanisch zu koppeln.

3. Stator nach Anspruch 2, wobei
die Finger (34) jeweils eine einzige Blechlamelle (10) aufweisen und die Vertiefung (37) eine Höhe aufweist, die der Dicke einer einzigen Blechlamelle (10) entspricht, oder
die Finger jeweils aus einer Vielzahl von n Blechlamellen gebildet sind und n nicht herausragende Blechlamellen zwischen benachbarten Fingern angeordnet sind, die eine Vertiefung mit einer Höhe h bilden, die der Dicke von n Blechlamellen entspricht.

4. Stator nach einem der Ansprüche 1 bis 3, wobei sich die Finger (48) senkrecht zu der Stapelrichtung in einer radialen Richtung erstrecken, oder sich die Finger (34, 36) in eine Umfangrichtung erstrecken.

5. Stator nach einem der Ansprüche 1 bis 4, wobei
die Finger (48) eine Breite aufweisen, die kleiner ist als die Breite der Randseite (47) und/oder
die Finger (48) jeweils eine Endfläche mit einem Ausschnitt oder einem Vorsprung aufweisen.

6. Stator nach einem der Ansprüche 2 bis 5, wobei
die Finger des ersten Statorsegments jeweils einen Ausschnitt (96) aufweisen und die Vertiefung des zweiten Statorsegments jeweils einen Vorsprung (97) aufweist, wobei der Ausschnitt (96) und der Vorsprung (97) ineinander greifen, um die laterale Position der Finger und der Vertiefung zu bestimmen, oder
die Finger des ersten Statorsegments jeweils einen Vorsprung (97) aufweisen und die Vertiefung des zweiten Statorsegments jeweils einen Ausschnitt (96) aufweist, wobei der Ausschnitt (96) und der Vorsprung (97) ineinander greifen, um die laterale Position der Finger und der Vertiefung zu bestimmen.

7. Stator nach einem der Ansprüche 1 bis 6, wobei
die Statorsegmente jeweils die Gestalt eines Statorzahns (31, 32) aufweisen, wobei die Statorzähne (31, 32) zu einem zylindrischen Stator zusammengefügt sind, oder
ein Statorsegment die Gestalt eines Statorrings (40) und mehrere Statorsegmente jeweils die Gestalt eines Statorzahns (41) aufweisen, wobei die Statorzähne (41) mit einer inneren Randseite (42) des Statorrings (40) zusammengefügt sind und einen zylindrischen Stator bilden. Bilden, oder
die Statorsegmente jeweils die Gestalt eines Teils (90, 90') eines Statorrings mit mehreren Statorzähnen (99) aufweist, wobei die Teile (90, 90') des Statorrings miteinander zu einem zylindrischen Stator zusammengefügt sind.

8. Stator nach Anspruch 7, wobei jeder Statorzahn (41, 99) bewickelt ist.

9. Stator nach einem der Ansprüche 1 bis 8, wobei das Blechpaket (23) erste Blechlamellen (10) und zweite Blechlamellen (11) aufweist, die unterschiedliche Außenkonturen aufweisen, wobei die ersten und zweiten Blechlamellen (10, 11) jeweils eine erste Endfläche und eine zweite Endfläche aufweisen, die gegenüber der ersten Endfläche liegt,
wobei eine erste Blechlamelle (10) und eine zweite Blechlamelle (11) derart angeordnet sind, dass eine erste Endfläche (12) der ersten Blechlamelle (10) über eine erste Endfläche (15) der zweiten Blechlamelle (11) an einer ersten Randseite (21) des Blechpakets (23) herausragt und die zweite Endfläche (16) der zweiten Blechlamelle (11) über die zweite Endfläche (13) der ersten Blechlamelle (10) an einer zweiten Randseite (22) des Blechpakts (23) herausragt, die gegenüber der ersten Randseite (21) liegt, oder
wobei eine erste Blechlamelle und eine zweite Blechlamelle derart angeordnet sind, dass eine erste Endfläche (48) der ersten Blechlamelle über eine erste Endfläche der zweiten Blechlamelle an einer ersten Randseite (47) des Blechpakets herausragt, wobei die zweite Endfläche der zweiten Blechlamelle und die zweite Endfläche der ersten Blechlamelle an einer zweiten Randseite des Blechpakets in einer Ebene liegen.

10. Stator nach einem der Ansprüche 1 bis 9, wobei die Blechlamellen
eine FeSi-basierte Legierung mit 2 bis 4,5 Gewichts-% von mindestens einem Element aus der Gruppe Si und Al, Rest Fe und unvermeidbaren Verunreinigungen aufweisen, oder
eine CoFe-basierte Legierung aufweisen, die 35 bis 55 Gewichts-% Co und bis zu 2,5 Gewichts-% V, Rest Fe und unvermeidbaren Verunreinigungen aufweist, oder
eine CoFe-basierte Legierung, die 45 Gewichts-% ≤ Co ≤ 52 Gewichts-%, 45 Gewichts-% ≤ Fe ≤ 52 Gewichts-%, 0,5 Gewichts-% ≤ V ≤ 2,5 Gewichts-%, Rest Fe und unvermeidbaren Verunreinigungen aufweist, oder
eine CoFe-basierte Legierung, die 35 Gewichts-% ≤ Co ≤ 55 Gewichts-%, vorzugsweise 45 Gewichts-% ≤ Co ≤ 52 Gewichts-%, 0 Gewichts-% ≤ Ni ≤ 0,5 Gewichts-%, 0,5 Gewichts-% ≤ V ≤ 2,5 Gewichts-%, Rest Fe und unvermeidbaren Verunreinigungen aufweist, oder
eine CoFe-basierte Legierung, die 35 Gewichts-% ≤ Co ≤ 55 Gewichts-%, 0 Gewichts-% ≤ V ≤ 2,5 Gewichts-%, 0 Gewichts-% ≤ (Ta + 2Nb) ≤ 1 Gewichts-%, 0 Gewichts-% ≤ Zr ≤ 1,5 Gewichts-%, 0 Gewichts-% ≤ Ni ≤ 5 Gewichts-%, 0 Gewichts-% ≤ C ≤ 0,5 Gewichts-%, 0 Gewichts-% ≤ Cr ≤ 1 Gewichts-%, 0 Gewichts-% ≤ Mn ≤ 1 Gewichts-%, 0 Gewichts-% ≤ Si ≤ 1 Gewichts-%, 0 Gewichts-% ≤ A1 ≤ 1 Gewichts-%, 0 Gewichts-% ≤ B ≤ 0,01 Gewichts-%, Rest Fe und unvermeidbaren Verunreinigungen aufweist, oder
eine CoFe-basierte Legierung, die 5 bis 25 Gewichts-% Co, 0,3 bis 5,0 Gewichts-% V, Rest Fe und unvermeidbaren Verunreinigungen aufweist.

11. Elektrische Maschine, aufweisend
einen Rotor und einen Stator nach einem der Ansprüche 1 bis 10 und eine Wicklung um den Stator herum, oder
einen Läufer und einen Stator nach einem der Ansprüche 1 bis 10 und eine Wicklung um den Stator herum.

12. Verfahren zum Herstellen eines mehrteiligen Stators, aufweisend:
Bereitstellen zumindest eines Bands aus einer weichmagnetischen Legierung, das mit einem Isolationsmaterial beschichtet ist,
Formen mehrerer Blechlamellen (10, 11) aus dem beschichteten Band,
Stapeln einer ersten Vielzahl von Blechlamellen (10, 11) aufeinander in einer Stapelrichtung (18), wobei die Blechlamellen (10, 11) derart angeordnet sind, dass an zumindest einer Randseite (21) zumindest eine Blechlamelle (10) herausragt und einen Finger (34) bildet,
Verbinden der Blechlamellen und Bilden eines ersten Blechpakets (23) eines ersten Statorsegments (31) mit zumindest einem Finger (34) an einer Randseite (31),
Stapeln einer zweiten Vielzahl von Blechlamellen (10, 11) aufeinander in einer Stapelrichtung, wobei die Blechlamellen (10, 11) derart angeordnet sind, dass an zumindest einer Randseite zumindest zwei Blechlamellen herausragen und zumindest zwei Finger (36) bilden,
Verbinden der Blechlamellen und Bilden eines zweiten Blechpakets (23) eines zweiten Statorsegments (32) mit zumindest zwei Fingern (36) an einer Randseite,
Zusammenfügen der Finger (34) des ersten Statorsegments (31) und zumindest zwei Finger (36) des zweiten Statorsegments (32), so dass der Finger (34) des ersten Statorsegments (31) und zumindest zwei Finger (36) des zweiten Statorsegments (32) ineinandergreifen, um das erste Statorsegment (31) mit dem zweiten Statorsegment (32) mechanisch zu koppeln.

13. Verfahren nach Anspruch 12, wobei erste Blechlamellen (10) mit einer ersten Außenkontur und zweite Blechlamellen (11) mit einer zweiten Außenkontur, die zu der ersten Außenkontur unterschiedlich ist, aus dem beschichteten Band geformt werden, und aufeinander gestapelt werden, wobei nach dem Stapeln einer ersten Blechlamelle (10) auf einer zweiten Blechlamelle (12) einen Finger (19, 20) aus einem herausragenden Teil der ersten Blechlamelle (10) oder der zweiten Blechlamelle (11) geformt wird.

14. Verfahren nach Anspruch 30, wobei
die ersten Blechlamellen (10, 11) und zweiten Blechlamellen abwechselnd aufeinander aufgestapelt werden, oder
die Blechlamellen der ersten Vielzahl aus einem ersten Band einer ersten weichmagnetischen Legierung und die Blechlamellen der zweiten Vielzahl aus einem zweiten Band einer zweiten weichmagnetischen Legierung geformt werden, wobei die erste und zweite weichmagnetische Legierung unterschiedlich sind.

15. Verfahren nach einem der Ansprüche 12 bis 14, wobei
sich die Finger (43, 48) senkrecht zu der Stapelrichtung in einer radialen Richtung erstrecken und der Finger (43) des ersten Statorsegments (40) und zumindest zwei Finger (48) des zweiten Statorsegments (41) in einer radialen Richtung zusammenfügt werden, sodass der Finger (43) des ersten Statorsegments (40) und zumindest zwei Finger (48) des zweiten Statorsegments (41) ineinandergreifen und das erste Statorsegment (40) mit dem zweiten Statorsegment (41) mechanisch koppeln, oder
sich die Finger (34, 36) senkrecht zu der Stapelrichtung in einer Umfangsrichtung erstrecken und der Finger (34) des ersten Statorsegments (31) und zumindest zwei Finger (36) des zweiten Statorsegments (32) in eine Umfangsrichtung zusammenfügt werden, sodass der Finger (34) des ersten Statorsegments (31) und zumindest zwei Finger (36) des zweiten Statorsegments (32) ineinandergreifen und das erste Statorsegment (31) mit dem zweiten Statorsegment (32) mechanisch koppeln.
